# EUROPEAN PATENT APPLICATION

(11) **EP 0 987 317 A1**
(43) Date of publication of application: **22.03.2000**
(21) Application number: 98923133.7
(22) Date of filing: 04.06.1998
(51) Int. Cl.: C11D 3/14, C09D 183/04, C09D 5/00, C09K 3/18

(54) **METHOD FOR SURFACE PRETREATMENT BEFORE FORMATION OF PHOTOCATALYTIC HYDROPHILIC FILM, AND DETERGENT AND UNDERCOAT COMPOSITION FOR USE IN THE SAME**

(30) Priority: 04.06.1997 JP 16186497; 04.06.1997 JP 16186597; 08.04.1998 JP 11278798
(71) Applicant: TOTO LTD., Kitakyushu-shi, Fukuoka 802 (JP)
(72) Inventor: KANNO, Mitsuyoshi, Kitakyushu-shi Fukuoka 802-8601 (JP); HAYAKAWA, Makoto, Kitakyushu-shi Fukuoka 802-8601 (JP); SHIBATO, Masahiro, Kitakyushu-shi Fukuoka 802-8601 (JP); YAMAMOTO, Masahiro, Kitakyushu-shi Fukuoka 802-8601 (JP); MACHIDA, Mitsuyoshi, Kitakyushu-shi Fukuoka 802-8601 (JP)
(74) Representative: Grünecker, Kinkeldey, Stockmair & Schwanhäusser Anwaltssozietät
(86) International application number: JP9802487
(87) International publication number: WO9855573

(57) **Abstract**

Disclosed are a method for forming a photocatalytically hydrophilifiable coating, involving a process for treating the surface of a substrate before the formation of a photocatalytically hydrophilifiable coating, which can form a good photocatalytically hydrophilifiable coating, and a cleaning agent and an undercoating composition for the method. The method for forming a photocatalytically hydrophilifiable coating comprises the steps of: cleaning the surface of a substrate with a predetermined cleaning agent; coating a photocatalytically hydrophilifiable coating liquid on the treated substrate; and curing the coating, or alternatively comprises the steps of: cleaning the surface of a substrate with a predetermined cleaning agent; applying a predetermined undercoating composition onto the surface of the substrate to form an undercoat; coating a photocatalytically hydrophilifiable coating liquid on the undercoat; and curing the coating to form a photocatalytically hydrophilifiable coating. The cleaning agent comprises at least one member selected from the group consisting of a surfactant, an abrasive, an acid, and a base. The undercoating composition for the undercoat comprises at least an inorganic oxide particle or a silicone or a silicone precursor and a solvent.

## Description

### [BACKGROUND OF THE INVENTION]

### Field of the Invention

The present invention relates to a method for treating the surface of a substrate before the formation of a highly hydrophilic coating using a photocatalyst and a cleaning agent and a pretreatment composition for the method.

### Background Art

PCT/WO 96/29375 discloses that the substance having a surface layer containing a photocatalyst and exhibiting high hydrophilicity (for example, a contact angle therewith with water of not more than 10° ) in response to photoexcitation of the photocatalyst. This technique can be utilized to improve antifogging properties and ensuring of visibility of transparent members, such as glasses, lenses, and mirrors, to improve water cleanability and rainfall cleanability of the surface of articles and to improve other properties.

### [Summary of the Invention]

The present inventors have now found that a certain pretreatment before the formation of the photocatalytically hydrophilifiable coating on the substrate can realize the formation of a good photocatalytically hydrophilifiable coating.

Accordingly, an object of the present invention is to provide a method for forming a photocatalytically hydrophilifiable coating, involving a process for treating the surface of a substrate before the formation of a photocatalytically hydrophilifiable coating, that can provide a good photocatalytically hydrophilifiable coating.

Another object of the present invention is to provide a cleaning agent and an undercoating composition for the method for forming a photocatalytically hydrophilifiable coating.

The method for forming a photocatalytically hydrophilifiable coating according to the present invention comprises the steps of:
cleaning the surface of a substrate with a predetermined cleaning agent;
coating a photocatalytically hydrophilifiable coating composition on the cleaned surface of the substrate; and
curing the coating, thereby forming a photocatalytically hydrophilifiable coating,
or alternatively
   comprises the steps of:
cleaning the surface of a substrate with a predetermined cleaning agent;
applying a predetermined undercoating composition on the cleaned surface of the substrate to form an undercoat;
coating a photocatalytically hydrophilifiable coating liquid on the undercoat; and
curing the coating, thereby forming a photocatalytically hydrophilifiable coating.

The cleaning agent, for use in the above method, for cleaning the surface of a substrate, on which a photocatalytically hydrophilifiable coating is to be formed, comprises at least one member selected from the group consisting of a surfactant, an abrasive, an acid, and a base.

The undercoating composition, for use in the above method, for forming an undercoat on the surface of a substrate before the formation of a photocatalytically hydrophilifiable coating comprises at least an inorganic oxide particle or a silicone or a silicone precursor and a solvent.

Further, according to the present invention, there is provided a member comprising: a substrate; an undercoat provided on the substrate; and a photocatalytically hydrophilifiable coating provided on the undercoat, the undercoat comprising at least one member selected from the group consisting of an inorganic oxide particle, a silicone, and silica.

### [BRIEF DESCRIPTION OF THE DRAWING]

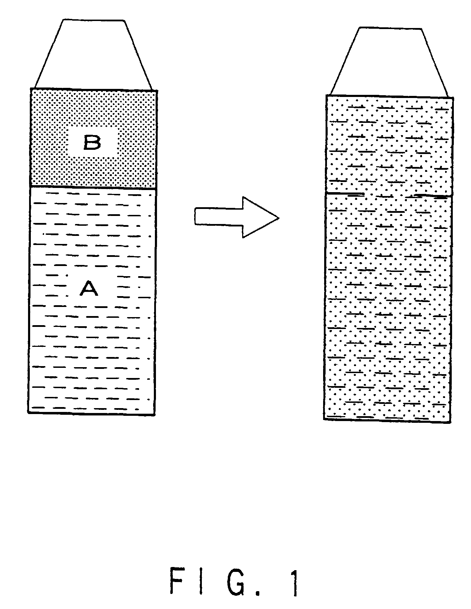

Fig. 1 is a container for placing therein the undercoating composition according to the present invention, the container comprising two chambers, chamber A and chamber B. An inorganic oxide particle, especially an inorganic oxide colloid, and a surfactant constituting the undercoating composition are separately placed respectively in the two chambers. Immediately before use, breaking of a partition provided between the two chambers or removal of a plug provided in the partition permits the two chambers to communicate with each other, thereby mixing the two components together.

### [DETAILED DESCRIPTION OF THE INVENTION]

### Pretreatment of surface of substrate

The term "photocatalytically hydrophilifiable coating" used in the present invention basically refers to that described in PCT/WO 96/29375, the disclosure of which is incorporated by reference.

According to the present invention, before the formation of a photocatalytically hydrophilifiable coating on the surface of a substrate,
(i) the surface of the substrate is cleaned with a cleaning agent described below, and
(ii) if necessary, an undercoating composition described below is applied onto the cleaned surface of the substrate to form an undercoat.

A photocatalytically hydrophilifiable coating liquid is coated on the treated surface of the substrate, and the coating is cured to form a photocatalytically hydrophilifiable coating.

### Cleaning of substrate surface

The surface of a substrate is favorably clean for forming a good photocatalytically hydrophilifiable coating.

According to the present invention, before the formation of a photocatalytically hydrophilifiable coating, the surface of the substrate is cleaned with a cleaning agent comprising at least one member selected from the group consisting of a surfactant, an abrasive, an acid, a base, and a solvent. The component(s) of the cleaning agent may be properly determined by taking into consideration the type of soil on the surface of the substrate to be cleaned. For example, preferably, a base or a surfactant is used for removing oleaginous soils, while an acid is used for removing soils attributable to sparingly soluble calcium salt or permanent soils, of a windowpane, composed mainly of silica gel.

According to a preferred embodiment of the present invention, preferably, the cleaning agent comprises at least an abrasive from the viewpoint of enhancing the cleaning effect. Therefore, according to one preferred embodiment of the present invention, there is provided a cleaning agent comprising (a) an abrasive and (b) at least one member selected from the group consisting of a surfactant, an acid, a base, and a solvent.

According to another preferred embodiment of the present invention, use of a nonionic surfactant is preferred. The nonionic surfactant is less likely to agglomerate fine particles of the photocatalyst contained in the photocatalytically hydrophilifiable coating liquid. Therefore, even though the surfactant is left on the surface which has been cleaned with the cleaning agent, the surfactant does not inhibit a good photocatalytically hydrophilifiable coating when the surfactant is the nonionic surfactant.

Further, according to still another preferred embodiment of the present invention, in order to remove permanent soil, composed mainly of silica gel, or a silicone coating, preferably, the cleaning agent of the present invention comprises at least one member selected from the group consisting of hydrogen fluoride, acid ammonium fluoride, and acid potassium fluoride. These soils may be removed by an abrasive. Use of the abrasive, however, requires "scouring" by handwork or by power-driven polisher. Hydrogen fluoride, acid ammonium fluoride, and acid potassium fluoride can advantageously chemically remove these soils.

The cleaning agent of the present invention may be used, for cleaning the surface of the substrate before the formation of a photocatalytically hydrophilifiable coating, by a method commonly known as a surface cleaning method using a cleaning agent. For example, soil deposited on the surface of the substrate may be removed by wiping with a cloth, a waste, absorbent cotton or the like impregnated with the cleaning agent of the present invention. Preferably, the cleaning agent of the present invention is not left on the surface of the substrate. Therefore, preferably, after the removal of soil with the cleaning agent, the cleaning agent left on the surface of the substrate is removed by wiping with a water-impregnated cloth, waste, absorbent cotton or the like, followed by wiping-off of water with a wiper, a dry cloth, a dry waste, a dry absorbent cotton or the like.

Examples preferred components of the cleaning agent according to the present invention are as follows.

### (a) Surfactant

Surfactants usable herein include anionic surfactants, such as ammonium polyoxyethylene alkylphenyl ether sulfonate, sodium polyoxyethylene alkylphenyl ether sulfonate, fatty acid potassium soap, fatty acid sodium soap, sodium dioctylsulfosuccinate, alkyl sulfate, alkyl ether sulfate, sodium alkylsulfate, sodium alkyl ether sulfate, polyoxyethylene alkyl ether sulfate, sodium polyoxyethylene alkyl ether sulfate, TEA salt of alkylsulfate, TEA salt of polyoxyethylene alkyl ether sulfate, sodium salt of 2-ethylhexylalkylsulfuric ester, sodium acyl methyl taurate, sodium lauroyl methyl taurate, sodium dodecylbenzensulfonate, sodium alkylbenzenesulfonates, disodium lauryl sulfosuccinate, disodium lauryl polyoxyethylene sulfosuccinate, polycarboxylic acid, oleoylsarcosin, amide ether sulfate, lauroyl sarcosinate, sodium salt of sulfo-FA ester, perfluoroalkylsulfonates, perfluoroalkylcarboxylaes, perfluoroalkylphosphoates, sodium perfluoroalkenyloxybenzenesulfonates, sodium perfluoroalkenyloxybenzenesulfonylsarcosinates, and perfluoroalkenyloxyaralkylsulfonic acids; nonionic surfactants, such as polyoxyethylene lauryl ether, polyoxyethylene tridecyl ether, polyoxyethylene acetyl ether, polyoxyethylene stearyl ether, polyoxyethylene oleyl ether, polyoxyethylene alkyl ether, polyoxyethylene alkyl esters, polyoxyethylene alkylphenol ethers, polyoxyethylene nonylphenyl ether, polyoxyethylene octylphenyl ether, polyoxyethylene laurate, polyoxyethylene stearate, polyoxyethylene alkylphenyl ethers, polyoxyethylene oleate, sorbitan alkyl esters, polyoxyethylene sorbitan alkyl esters, polyether-modified silicone, polyester-modified silicone, sorbitan laurate, sorbitan stearate, sorbitan palmitate, sorbitan sesquioleate, sorbitan oleate, polyoxyethylene sorbitan laurate, polyoxyethylene sorbitan stearate, polyoxyethylene sorbitan palmitate, polyoxyethylene sorbitan oleate, glycerol stearate, polyglycerin fatty ester, alkylalkylol amide, lauric acid diethanol amide, oleic acid diethanol amide, oxyethylene dodecylamine, polyoxyethylene dodecylamine, polyoxyethylene alkylamine, polyoxyethylene octadecylamine, polyoxyethylene alkylpropylene diamine, polyoxyethylene oxypropylene block polymer, polyoxyethylene stearate, perfluoroalkyl ethylene oxide adducts, perfluoroalkyl ethylene oxide/propylene oxide adducts, perfluoroalkyl propylene oxide adducts, perfluoroalkyl oligomers, perfluoroalkenyl polyoxyethylene ethers, perfluoroalkenyloxy oxyethylene ethers, and diglycerinetetrakis(perfluoroalkenyloxy oxyethylene ether); amphoteric surfactants, such as dimethyl alkyl betaine, alkylglycine, amide betaine, imidazoline, perfluoroalkylaminosulfonates, perfluoroalkylbetaines, and perfluoroalkenyloxyaralkylbetaines; and cationic surfactants, such as octadecyl dimethyl benzyl ammonium chloride, alkyl dimethyl benzyl ammonium chloride, tetradecyl dimethyl benzyl ammonium chloride, dioleyl dimethyl ammonium chloride, quaternary salt of 1-hydroxy-2-alkylimidazoline, alkylisoquinolinium bromide, polymeric amine, octadecyl trimethyl ammonium chloride, alkyl trimethyl ammonium chloride, dodecyl trimethyl ammonium chloride, hexadecyl trimethyl ammonium chloride, behenyl trimethyl ammonium chloride, quaternary salt of alkylimidazoline, dialkyl dimethyl ammonium chloride, octadecylamine acetate, tetradecylamine acetate, alkylpropylenediamine acetate, didecyl dimethyl ammonium chloride, perfluoroalkyl trimethyl ammonium salts, perfluoroalkyl quaternary ammonium salts, perfluoroalkenyloxybenzene sulfone alkyl ammonium iodides, and perfluoroalkenyloxybenzamide alkyl ammonium iodides.

### (b) Abrasive

Abrasives usable herein include cerium oxide, silica stone powder, tripoli, dolomite, diatomaceous earth, aluminum oxide, alumina, silica, talc, kaolin, bentonite, calcium hydrogenphosphate, calcium carbonate, hydrated silicic acid, aluminum silicate, silica stone, silicon carbide, aluminum hydroxide, sodium metaphosphate, calcium phosphate, calcium pyrophosphate, zeolite, zircon sand, zirconium oxide, zirconia silicate, glass powder, pearlite, magnesium oxide, activated clay, terra abla, titanium oxide, iron oxide, chromium oxide, zinc oxide, diamond powder, boron nitride, and boron carbide. The average particle diameter of the abrasive is preferably about 0.01 to 100 µm, more preferably about 0.01 to 10 µm, because the substrate is less likely to be scratched.

### (c) Acid

Acids usable herein include inorganic acids, such as sulfuric acid, nitric acid, hydrochloric acid, phosphoric acid, hydrogen fluoride, acid ammonium fluoride, and acid potassium fluoride, and organic acids, such as formic acid, acetic acid, oxalic acid, citric acid, malic acid, succinic acid, sulfamic acid, glycolic acid, and gluconic acid.

### (d) Base

Bases usable herein include sodium hydroxide, potassium hydroxide, sodium carbonate, sodium silicate, sodium phosphate, aqueous ammonia, monoethanolamine, diethanolamine, triethanolamine, and alkali electrolytic hydrogen.

### (e) Solvent

The solvent is preferably water and/or an organic solvent. Examples of organic solvents usable herein include: alcohols, such as methanol, ethanol, isopropanol, n-propanol, isobutanol, ethylene glycol, and propylene glycol; ketones, such as acetone, methyl ethyl ketone, methyl propyl ketone, methyl butyl ketone, and dipropyl ketone; esters, such as ethyl acetate, propyl acetate, isopropyl acetate, butyl acetate, amyl acetate, and ethyl butyrate; hydrocarbons, such as n-hexane, cyclohexane, and heptane; petroleum, such as kerosine, white spirit, mineral spirit, and naphtha; glycol solvents, such as diethylene glycol, ethylene glycol alkyl ethers, diethylene glycol alkyl ethers, oligoethylene glycol alkyl ethers, dipropylene glycol, propylene glycol alkyl ethers, dipropylene glycol alkyl ethers, and oligopropylene glycol alkyl ethers; and glycerin.

### (f) Other components

The cleaning agent of the present invention comprises, in addition to the above components, a builder, a stabilizer, a solvent, and a solubilizer.

Builders usable herein include sodium carbonate, sodium phosphate, potassium phosphate, sodium metasilicate, sodium silicate, zeolite, sodium tripolyphosphate, potassium pyrophosphate, sodium sulfate, sodium citrate, sodium ethylenediaminetetraacetate, sodium nitrilotriacetate, sodium 3-oxapentanoate, sodium polyacrylate, sodium salt of acrylic acid/methacrylic acid copolymer, sodium salt of acrylic acid/maleic acid copolymer, and sodium salt of carboxymethyl cellulose.

Stabilizers usable herein include sodium salt of carboxymethyl cellulose, methyl cellulose, ethyl cellulose, hydroxyethyl cellulose, polyethylene glycol, carboxyvinyl polymer, polyacrylates, polyacrylamide, polyvinyl alcohol, polyvinyl pyrrolidone, saponification product of polyvinyl acetate, xanthane gum, guar gum, sodium alginate, gum arabic, agar, gelatin, pectin, dextrin, starch, ligninesulfonate, vinyl acetate, isobutylmaleic acid copolymer, carboxylates, aluminum magnesium silicate, magnesium silicate, bentonite, montmorillonite, attapulgite, and sepiolite.

The solvent is not particularly limited so far as it can dissolve or disperse other component(s) of the cleaning agent. Examples of preferred solvents include those described above in connection with the solvent (e). When the solvent (e) is already contained in the cleaning agent, the solvent may serve also as the solvent.

Solubilizers usable herein include p-toluenesulfonic acid and sodium sulfosuccinic acid.

### Formation of undercoat on substrate surface

According to the present invention, preferably, an undercoat is provided on the surface of the substrate which has been cleaned by the above method. The undercoat according to the present invention can improve the wettability of the substrate by a coating liquid for a photocatalytically hydrophilifiable coating described below and consequently permits the coating liquid to be evenly applied onto the surface of the substrate, resulting in the formation of a good photocatalytically hydrophilifiable coating. Further, the undercoat has the effect of strongly bonding the substrate to the photocatalytically hydrophilifiable coating. The photocatalyst contained in the photocatalytically hydrophilifiable coating often exhibits oxidative effect upon photoexcitation. In some cases, the surface of the substrate is attacked by the oxidative effect. For example, when the substrate surface is a coated surface or a resin surface, there is a fear of the surface being deteriorated by the oxidative effect of the photocatalyst. The undercoat provided between the photocatalytically hydrophilifiable coating and the substrate prevents the attack of the substrate surface by the oxidative effect of the photocatalyst.

The undercoating composition for the undercoat according to the present invention comprises: at least one member selected from the group consisting of an inorganic oxide particle, a silicone capable of forming a silicone resin coating, a silicone precursor capable of forming a silicone resin coating, and a silica precursor capable of forming a silica coating; and a solvent.

Specifically, the undercoating composition according to the present invention may be classified into four embodiments.

The undercoating composition according to the first embodiment comprises at least an inorganic oxide particle and a solvent.

The undercoating composition according to the second embodiment comprises at least a silicone and a solvent.

The undercoating composition according to the third embodiment comprises at least a silicone precursor and a solvent.

The undercoating composition according to the fourth embodiment comprises at least a silica precursor and a solvent.

Examples of inorganic oxide particles contained in the undercoating composition according to the first embodiment include: single oxides, such as silica, alumina, zirconia, ceria, yttria, boronia, magnesia, calcia, ferrite, amorphous titania, and hafnia; and composite oxides, such as barium titanate, calcium silicate, water glass, aluminosilicate, and calcium phosphate.

According to a preferred embodiment of the present invention, the inorganic, oxide is used in the from of an aqueous colloid using water as a dispersing medium, or in the form of an organosol comprising the inorganic oxide dispersed in a colloid form in a hydrophilic solvent, such as ethyl alcohol, isopropyl alcohol, or ethylene glycol. Use of colloidal silica is particularly preferred.

Although the diameter of the inorganic oxide particles is not particularly limited, a particle diameter of about 5 to 50 nm in the form of the aqueous colloid or organosol is preferred from the viewpoint of gloss, turbidity, haze, transparency and the like of the final photocatalytically hydrophilifiable coating.

According to a preferred embodiment of the present invention, the undercoating composition according to the first embodiment comprises colloidal silica, a surfactant, and a solvent.

The colloidal silica may be any of aqueous colloidal silica using water as a dispersing medium and an organosol comprising silica dispersed in a colloid form in a hydrophilic solvent, such as ethyl alcohol, isopropyl alcohol, or ethylene glycol.

Preferred surfactants usable in this embodiment include:
anionic surfactants, such as fatty acid salts (fatty acid soaps, fluorofatty acid salts and the like), sulfates (α-olefin sulfates, higher alcohol sulfates, fatty acid ester sulfates, sulfated oils, higher alcohol AOA sulfates, alkyl phenol AOA sulfates, fluorosulfates and the like), sulfonates (α-olefin sulfonates, α-sulfonated fatty acid salts, α-sulfonated fatty acid ester salts, alkylbenzenesulfonates, Igepon A type, aerosol OT type, polystyrenesulfonates and the like), phosphates (higher alcohol phosphates, higher alcohol AOA phosphates and the like);
cationic surfactants, such as amine salt type cationic surfactants (higher aliphatic amine hydrochloride and the like) and quaternary ammonium salt type surfactants (alkyldimethylbenzylammonium salt and the like);
amphoteric surfactants, such as amino acid type amphoteric surfactants (sodium laurylaminopropionate and the like), betaine type amphoteric surfactants (lauryldimethyl betaine and the like), sulfate type amphoteric surfactants, sulfonate type amphoteric surfactants, and phosphate type amphoteric surfactants; and
nonionic surfactants, such as polyhydric alcohol type nonionic surfactants (fatty acid monoesters of glycerol, sorbitan esters, fatty acid esters of sugar and the like), polyethylene glycol type nonionic surfactants (polyoxyalkylene oxide adducts of higher alcohols, polyoxyalkylene oxide adducts of alkylphenols, polyoxyalkylene oxide adducts of fatty acids, polyoxyalkylene oxide adducts of higher aliphatic amines, Pluronic type nonionic surfactants, polyoxyalkylene oxide adducts of polyhydric alcohol nonionic surfactants, polyether-modified organosiloxanes, polyoxyalkylene oxide adducts of fluoroalcohols and the like), and fatty acid alkanolamides.

According to a preferred embodiment of the present invention, the surfactant is preferably a nonionic surfactant, particularly preferably a nonionic surfactant having a cloud point of 50°C or above in the form of a 2 mass% aqueous solution. This is because the surfactant having a cloud point of 50°C or above can easily provide an even thin coating. According to a particularly preferred embodiment of the present invention, the nonionic surfactant is preferably a polyother-modified organopolysiloxane.

The content of the colloidal silica in the composition is preferably about 0.05 to 2.0 mass%, and the content of the surfactant in the composition is preferably about 0.05 to 2.0 mass%.

Preferably, the solvent constituting the composition comprises a water-soluble solvent and/or water. Examples of water-soluble solvents usable herein include glycol solvents, such as ethylene glycol and ethylene glycol monomethyl ether, alcohols having 1 to 4 carbon atoms, acetone, and n-methyl pyrrolidone. Use of a water-soluble solvent having a boiling point of 180 to 235°C in combination with an alcohol having 1 to 4 carbon atoms is preferred. Examples of water-soluble solvents having a boiling point of 180 to 235°C include, but are not limited to, ethylene glycol, diethylene glycol, propylene glycol, dipropylene glycol, diethylene glycol monomethyl ether, diethylene glycol monoethyl ether, diethylene glycol monoisopropyl ether, diethylene glycol monobutyl ether, dipropylene glycol monomethyl ether, dipropylene glycol monoethyl ether, dipropylene glycol monoisopropyl ether, dipropylene glycol monobutyl ether, ethylene glycol dibutyl ether, diethylene glycol diethyl ether, diethylene glycol diisopropyl ether, triethylene glycol dimethyl ether, glycerin monomethyl ether, trimethylene glycol, and N-methylpyrrolidone. Alcohols having 1 to 4 carbon atoms include methyl alcohol, ethyl alcohol, n-propyl alcohol, isopropyl alcohol, n-butyl alcohol, isobutyl alcohol, s-butyl alcohol, t-butyl alcohol, acetone, ethyl methyl ketone, 1,3-butanediol, 2,3-butanediol, 1,4-butanediol, and modified alcohols, such as isopropyl-modified ethyl alcohol. Among them, ethyl alcohol, modified ethyl alcohol, isopropyl alcohol, and n-butyl alcohol are preferred.

The composition according to the first embodiment may optionally contain preservatives, perfumes, antioxidants, chelating agents, antifoaming agents and the like.

The silicone contained in the undercoating composition according to the second embodiment is preferably one represented by the average composition formula:

RₚSiO_{(4-p)/2}

wherein R represents a member selected from the group consisting of a hydrogen atom and one or more organic groups;
X represents an alkoxy group or a halogen atom; and
p is a number satisfying 0 < p < 2.

The organic group represented by R refers to an alkyl (more preferably an unsubstituted alkyl having 1 to 18 carbon atoms, most preferably an alkyl having 3 to 18 carbon atoms) or an aryl (preferably phenyl).

The silicone may be provided by hydrolyzing or dehydropolycondensing a silicone precursor added to the undercoating composition, and the undercoating composition with the silicone precursor added thereto is an undercoating composition according to the third embodiment.

One preferred example of the silicone precursor is a siloxane represented by the average composition formula:

RₚSiX_{q}O_{(4-p-q)/2}

wherein R is as defined above;
X represents an alkoxy group or a halogen atom; and
p is a number satisfying 0 < p < 2 and q is a number satisfying 0 < q < 4.

Another preferred example of the silicone coating precursor capable of forming a silicone coating which may be used in the composition of the present invention is a hydrolyzable silane derivative represented by the general formula:

RₚSiX₄₋ₚ

wherein R is as defined above;
X represents an alkoxy group or a halogen atom; and
p is 1 or 2.

Specific examples of preferred hydrolyzable, silane derivatives include methyltrimethoxysilane, methyltriethoxysilane, methyltripropoxysilane, methyltributoxysilane, ethyltrimethoxysilane, ethyltriethoxysilane, ethyltripropoxysilane, ethyltributoxysilane, phenyltrimethoxysilen, phenyltriethoxysilane, phenyltripropoxysilane, phenyltributoxysilane, dimethyldimethoxysilane, dimethyldiethoxysilane, dimethyldipropoxysilane, dimethyldibutoxysilane, diethyldimethoxysilane, diethyldiethoxysilane, diethyldipropoxysilane, diethyldibutoxysilane, phenylmethyldimethoxysilane, phenylmethyldiethoxysilane, phenylmethyldipropoxysilane, phenylmethyldibutoxysilane, n-propyltrimethoxysilane, n-propyltriethoxysilane, n-propyltripropoxysilane, n-propyltributoxysilane, γ-glycosidoxypropyltrimethoxysilane, and γ-acryloxypropyltrimethoxysilane.

The siloxane may be prepared by partial hydrolysis and dehydropolycondensation of the hydrolyzable silane derivative, or by dehydropolycondensation of a partial hydrolyzate of the hydrolyzable silane derivative with a partial hydrolyzate of tetramethoxysilane, tetraethoxysilane, tetrapropoxysilane, tetrabutoxysilane, diethoxydimethoxysilane or the like.

Further, according to a preferred embodiment of the present invention, the silicone or precursor thereof is preferably a silicone or a precursor thereof wherein an organo group containing a crosslinkable functional group is bonded to a silicon atom. A crosslinking reaction of the crosslinkable functional group permits the undercoat to be strongly fixed to the substrate surface, and to the photocatalytically hydrophilifiable coating formed on the undercoat. Specific examples of the silicone or precursor thereof include those represented by the above composition formula wherein R represents an organic group having a crosslinkable functional group. Crosslinkable functional groups include epoxy, ester, cyano, phosphate, amino, snide, mercapto, carbonyl, alkenyl, sulfonate, ether, nitrile, nitro, and carboxyl groups. Crosslinked formed by these functional groups include epoxy crosslink, urethane crosslink, vulcanization crosslink, and peptide crosslink.

Examples of silicone precursors containing a crosslinkable functional group include hydrolyzable silane derivatives, such as γ-glycosidoxypropyltrimethoxysilane, γ-glycosidoxypropyltriethoxysilane, γ-glycosidoxypropylmethyldimethoxysilane, γ-glycosidoxypropylmethyldiethoxysilane, β-(3,4-epoxycyclohexyl)ethyltrimethoxysilane, β-(3,4-epoxycyclohexyl)ethyltriethoxysilane, γ-mnethacryldxypropyltrimethoxysilane, γ-methacryloxypropyltriethoxysilane, γ-methacryloxypropylmethyldimethoxysilane, γ-methacryloxypropylmethyldiethoxysilane, γ-aminopropyltrimethoxysilane, γ-aminopropyltriethoxysilane, γ-aminopropylmethyldimethoxysilane, γ-aminopropylmethyldiethoxysilane, γ-mercaptopropyltrimethoxysilane, γ-mercaptopropyltriethoxysilane, γ-mercaptopropylmethyldimethoxysilane, and γ-mercaptopropylmethyldiethoxysilane, hydrolyzates thereof, partial hydrolyzates thereof, polymers of the hydrolyzates, and polymers of the partial hydrolyzates.

Examples of preferred silica coating precursors contained in the undercoating composition according to the fourth embodiment include silicates represented by the average composition formula

SiX_{q}O_{(4-q)/2}

wherein X represents an alkoxy group or a halogen atom and q is a number satisfying 0 < q < 4.

Another preferred examples of the silica coating precursor is a tetrafunctional, hydrolyzable silane derivative represented by the general formula:

SiX₄

wherein R is as defined above; and
X represents an alkoxy group or a halogen atom.

Specific examples of preferred tetrafunctional, hydrolyzable silane derivatives include tetramethoxysilane, tetraethoxysilane, tetrapropoxysilane, tetrabutoxysilane, and diethoxydimethoxysilane.

The solvent contained in the undercoating composition according to the present invention is not particularly limited so far as it can stably dissolve or disperse the above components. Preferred examples thereof include water, an alcohol, such as ethanol, isopropanol, n-propanol, or butanol, and a mixed solvent composed of water and the alcohol.

According to a preferred embodiment of the present invention, the undercoating composition further comprises a binder for fixing the inorganic oxide particle, silicone, or silica on the surface of the substrate. Binders usable herein include: organic binders, for example, water-soluble polymers, carboxymethyl cellulose, methyl cellulose, ethyl cellulose, hydroxyethyl cellulose, xanthane gum, guar gum, agar, dextrin, starch, pectin, sodium alginate, gum arabic, gelatin, ligninesulfonate, polyethylene glycol, polypropylene glycol, carboxyvinyl polymer, acrylic ester polymer, polyacrylate, polyacrylamide, polyvinyl alcohol, polyvinylpyrrolidone, polyvinyl acetate, saponification product of polyvinyl acetate, acrylic ester polymer, isobutylmaleic acid copolymer, acrylic acid/methacrylic acid copolymer, acrylic acid/maleic acid copolymer, methyl vinyl ether/maleic anhydride copolymer, urethane resin, acrylic resin, silicone resin, acrylsilicone resin, fluoropolymer, and fluoromonomer; and inorganic binders, for example, water glass, silicates, such as potassium silicate and lithium silicate, phosphates, such as aluminum phosphate, zinc phosphate, hydroxyapatite, and calcium phosphate, biphosphates, cements, lime, gypsum, feldspar, glaze, plaster, enamel frit, layered oxides, clay, borates, aluminosilicates, borosilicates, alumina, organotitanates, titanium coupling agents, and silane coupling agents. Cements usable herein include: portland cements, such as high-early-strength cement, normal cement, moderate heat cement, sulfate resisting cement, white cement, oil well cement, and geothermal well cement; blended cements, such as fly ash cement, high sulfate cement, silica cement, and high furnace cement; and alumina cement. Plasters usable herein include gypsum plaster, lime plaster, and dolomite plaster. Fluoropolymers usable herein include: crystalline fluororesins, such as polyvinylidene fluoride, polyvinyl fluoride, polyethylene trifluoride chloride, polyethylene tetrafluoride, polyethylene tetrafluoride/propylene hexafluoride copolymer, ethylene/polyethylene tetrafluoride copolymer, ethylene/ethylene trifluoride chloride copolymer, and ethylene tetrafluoride/perfluoroalkyl vinyl ether copolymer; noncrystalline fluororesins, such as perfluorocyclopolymer, vinyl ether/fluoroolefin copolymer, and vinyl ester/fluoroolefin copolymer; and various fluororubbers.

Preferably, the undercoating composition according to the present invention may comprise, in addition to the above components, a hydrolysis catalyst for a silicone, a curing (polymerization) catalyst for a silicone, a surfactant, and a levelling agent.

Suitable hydrolysis catalysts include nitric acid, hydrochloric acid, acetic acid, sulfuric acid, maleic acid, propionic acid, adipic acid, fumaric acid, phthalic acid, valeric acid, lactic acid, butyric acid, citric acid, malic acid, picric acid, formic acid, carbonic acid, and phenol, these catalysts having pH 2 to 5.

Curing catalysts usable herein include: aluminum compounds, such as aluminum chelate, aluminum acetyl acetonate, aluminum perchlorate, aluminum chloride, aluminum isobutoxide, and aluminum isopropoxide; titanium compounds, such as tetraisopropyl titanate, and tetrabutoxy titanate; basic compounds, such as sodium hydroxide, lithium hydroxide, potassium hydroxide, sodium methylate, sodium acetate, sodium formate, potassium acetate, potassium formate, potassium propionate, and tetramethyl ammonium hydroxide; amine compounds, such as n-hexylamine, tributylamine, diazabicycloundecene, ethylenediamine, hexanediamine, diethylenetriamine, tetraethylenepentamine, triethylenetetramine, ethanolamines, γ-aminopropyltrimethoxysilane, γ-aminopropylmethyldimethoxysilane, γ-(2-aminomethyl)-aminopropyltrimethoxysilane, and γ-(2-aminomethyl)-aminopropylmethyldimethoxysilane; tin compounds, such as tin acetyl acetonate, and dibutyltin octylate; metal-containing compounds, such as cobalt octylate, cobalt acetyl acetonate, and iron acetyl acetonate; and acidic compounds, such as phosphoric acid, nitric acid, phthalic acid, p-toluenesulfonic acid, and tirchloroacetic acid.

Surfactants usable herein include: anionic surfactants, such as ammonium polyoxyethylene alkylphenyl ether sulfonate, sodium polyoxyethylene alkylphenyl ether sulfonate, fatty acid sodium soap, fatty acid potassium soap, sodium dioctylsulfosuccinate, alkyl sulfate, alkyl ether sulfate, sodium alkylsulfate, sodium alkyl ether sulfate, TEA salt of alkylsulfate, sodium polyoxyethylene alkyl ether sulfate, polyoxyethylene alkyl ether sulfate, TEA salt of polyoxyethylene alkyl ether sulfate, sodium salt of 2-ethylhexylalkylsulfuric ester, sodium acyl methyl taurate, sodium lauroyl methyl taurate, sodium dodecylbenzensulfonate, disodium lauryl sulfosuccinate, disodium lauryl polyoxyethylene sulfosuccinate, polycarboxylic acid, oleoylsarcosin, amide ether sulfate, lauroyl sarcosinate, and sodium salt of sulfo-FA ester; nonionic surfactants, such as polyoxyethylene lauryl ether, polyoxyethylene tridecyl ether, polyoxyethylene stearyl ether, polyoxyethylene oleyl ether, polyoxyethylene alkyl ether, polyoxyethylene alkyl ester, polyoxyethylene alkylphenyl ether, polyoxyethylene laurate, polyoxyethylene stearate, polyoxyethylene oleate, sorbitan stearate, sorbitan alkyl ester, polyoxyethylene sorbitan alkyl ester, polyether-modified silicone, polyester-modified silicone, sorbitan laurate, sorbitan palmitate, sorbitan oleate, sorbitan sesquioleate, polyoxyethylene sorbitan laurate, polyoxyethylene sorbitan stearate, polyoxyethylene sorbitan palmitate, polyoxyethylene sorbitan oleate, glycerol stearate, polyglycerin fatty ester, alkylalkylol amide, lauric acid diethanol amide, oleic acid diethanol amide, polyoxyethylene alkylamine, polyoxyethylene stearate, and polyoxyethylene alkylpropylene diamine; cationic surfactants, such as alkyl dimethyl benzyl ammonium chloride, quaternary salt of 1-hydroxyethyl-2-alkylimidazoline, alkylisoquinolinium bromide, polymeric amine, alkyl trimethyl ammonium chloride, quaternary salt of alkylimidazoline, dialkyl dimethyl ammonium chloride, octadecylamine acetate, alkylpropylenediamine acetate, tetradecylamine acetate, dioleyl dimethyl benzyl ammonium chloride; and amphoteric surfactants, such as dimethyl alkyl betaine, alkylglycin, amide betaine, and imidazoline.

Levelling agents usable herein include diacetone alcohol, ethylene glycol monomethyl ether, 4-hydroxy-4-methyl-2-pentanone, dipropylene glycol, tripropylene glycol, 1-ethoxy-2-propanol, 1-butoxy-2-propanol, propylene glycol monomethyl ether, 1-propoxy-2-propanol, dipropylene glycol monomethyl ether, dipropylene glycol monoethyl ether, and tripropylene glycol monomethyl ether.

The undercoating composition according to the present invention may be provided as a composition comprising all the above components. In some cases, however, preferably, a part of the components is placed in a container, while the other component(s) is placed in a different container. In this case, all the components are mixed together immediately before use to prepare a composition comprising all the components.

For example, an inorganic, oxide particle, especially an inorganic oxide colloid, contained in the undercoating composition according to the first embodiment has a fear of the dispersion stability being deteriorated by the presence of a surfactant. Further, there is a possibility that the surfactant is unfavorably decomposed with water which is a dispersing medium for the inorganic oxide colloid. Accordingly, in this case, preferably, the inorganic oxide colloid and the surfactant are provided in different separate containers and, immediately before use, mixed together. Further, according to a preferred embodiment of the present invention, the inorganic oxide colloid and the surfactant are placed in a container, as shown in Fig. 1, comprising two chambers A and B, and, immediately before use, either a partition provided between the two chambers is broken, or a plug provided in the partition removed to allow the two chambers to communicate with each other, thereby mixing the two components together.

According to a preferred embodiment of the present invention, when the undercoating composition is applied, the cleanness of the surface of the substrate may not be very high. This is because the undercoat formed using the undercoating composition of the present invention substantially smoothens the surface of the substrate and improve the wettability of the substrate surface by a composition capable of forming a photocatalytically hydrophilifiable coating described below. This makes it possible to form a good photocatalytically hydrophilifiable coating even when the substrate surface is not in a cleaned state. For example, for the body of vehicles, such as automobiles, satisfactory cleaning with a cleaning agent is desired. When the undercoating composition according to the present invention is used, however, the cleanness of the body surface to be coated may not be necessarily high.

On the other hand, in the case of members where high transparency is required, such as glass surface, cleaning of the member surface with the above cleaning agent to a highest possible level is preferred, rather than use of the undercoating composition.

The undercoating composition according to the present invention may be applied by any suitable method, such as spray coating, flow coating, spin coating, dip coating, gravure coating, roll coating, fabric coating, sponge coating, or brush coating.

For the soil on the substrate attributable to a water-repellent silicone (for example, a silicone sealant or a silicone water repellant for a window of automobiles), it is sometimes preferred to use a method wherein, after cleaning with the above cleaning agent, ultraviolet light is applied to the surface of the substrate, or a method wherein the surface of the substrate is subjected to corona discharge treatment followed by application of the undercoating composition on the treated surface of the substrate. It is difficult to remove soil attributable to the water-repellent silicone. Removal of the soil with an abrasive requires strong "scouring," and removal of the soil by chemical treatment with hydrogen fluoride or the like leads to a fear of the substrate being attacked or a fear of the safety of workers being lowered. On the other hand, removal of soil removable by the cleaning agent of the present invention (for example, color soil) followed by application of ultraviolet light to the substrate with silicone remaining on the surface thereof or by corona discharge treatment of the substrate with silicone remaining on the surface thereof results in decomposition of an organic group of the silicone to form a hydrophilic OH group on the surface of the substrate. By virtue of the formation of the OH group, the surface of the substrate can be hydrophilified despite the soil attributable to the silicone remains unremoved, permitting a coating to be evenly and firmly provided on the surface of the substrate. Ultraviolet light sources for ultraviolet irradiation usable herein include, for example, mercury lamps, xenon lamps, and germicidal lamps.

Further, according to a further aspect of the present invention, there is provided a member comprising: a substrate; an undercoat provided on the substrate; and a photocatalytically hydrophilifiable coating provided on the undercoat, the undercoat comprising at least one member selected from the group consisting of an inorganic oxide particle, a silicone, and silica. Substrates, wherein the presence of the undercoat is particularly advantageous, include those of which the surface is likely to be attacked by the photocatalytic action, such as the body of automobiles, glass, or painted or coated surfaces (for example, painted or coated external wall surfaces and outer surface of shutters).

### Photocatalytically hydrophilifiable coating

As described above, the ten "photocatalytically hydrophilifiable coating" as used herein basically refers to one described in PCT/WO 96/29375.

The photocatalytically hydrophilifiable coating is formed on the surface of a substrate, which has been cleaned with the cleaning agent according to the present invention, or the surface of a substrate with an undercoat, using the undercoating composition of the present invention, formed thereon.

According to a preferred embodiment of the present invention, there is provided a coating liquid which is preferably applied onto the surface of a substrate, which has been cleaned with the cleaning agent of the present invention, or the surface of a substrate with an undercoat, using the undercoating composition of the present invention, formed thereon, to form a photocatalytically hydrophilifiable coating.

The coating liquid basically comprises:
(a) a photocatalyst particle of a metal oxide;
(b) at least one member selected from the group consisting of an inorganic oxide particle, a silicone resin coating precursor capable of forming a silicone resin coating, and a silica coating precursor capable of forming a silica coating; and
(c) a solvent.

The photocatalyst particle contained in the composition according to the present invention basically comprises a metal oxide. Specifically, the term "photocatalyst" used herein refers to a material which, when exposed to light (excitation light) having higher energy (i.e., shorter wavelength) than the energy gap between the conduction band and the valence band of the crystal, can cause excitation (photoexcitation) of electrons in the valence band to produce a conduction electron and a hole. Photocatalytic oxides usable herein include, for example, anatase form of titanium oxide, rutile form of titanium oxide, zinc oxide, tin oxide, ferric oxide, dibismuth trioxide, tungsten trioxide, and strontium titanate.

The average crystallite diameter of the photocatalytic particles is preferably not more than 100 nm. The upper limit of the average crystallite diameter is preferably about 20 nm, more preferably about 10 nm. The lower limit of the average crystallite diameter is preferably about 1 nm, more preferably about 3 nm. An average crystallite diameter of the photocatalytic particles in the above range enables the hydrophilification to be satisfactorily exhibited and, at the same time, makes it possible to prevent loss of transparency, of a surface with the composition applied thereto, derived from scattering of visible light caused by the particles.

Examples of inorganic oxide particles usable in the composition according to the present invention include: single oxides, such as silica, alumina, zirconia, ceria, yttria, boronia, magnesia, calcia, ferrite, amorphous titania, and hafnia; and composite oxides, such as barium titanate, calcium silicate, water glass, aluminosilicate, and calcium phosphate.

According to a preferred embodiment of the present invention, the inorganic oxide is preferably in the form of either an aqueous colloid using water as a dispersing medium or an organosol prepared by dispersing the inorganic oxide in a colloidal form in a hydrophilic solvent, such as ethyl alcohol, isopropyl alcohol, or ethylene glycol. In particular, use of colloidal silica is preferred.

The diameter of the inorganic oxide particle is not particularly limited. However, a particle diameter of about 5 to 50 nm in the form of an aqueous colloid or an organosol is preferred from the viewpoint of the gloss, turbidity, haze, transparency and the like of the final photocatalytically hydrophilifiable coating.

A preferred example of the silicone coating precursor, capable of forming a silicone coating, which may be used in the composition of the present invention is a siloxane represented by the average composition formula:

RₚSiX_{q}O_{(4-p-q)/2}

wherein R represents a member selected from the group consisting of a hydrogen atom and one or more organic groups;
X represents an alkoxy group or a halogen atom; and
p is a number satisfying 0 < p < 2 and q is a number satisfying 0 < q < 4.

Another preferred example of the silicone coating precursor, capable of forming a silicone coating, which may be used in the composition of the present invention is a hydrolyzable silane derivative represented by the general formula:

RₚSiX₄₋ₚ

wherein R is as defined above;
X represents an alkoxy group or a halogen atom; and
p is 1 or 2.

In this case, the organic group represented by R refers to preferably an alkyl (more preferably an unsubstituted alkyl having 1 to 18 carbon atoms, most preferably an alkyl having 3 to 18 carbon atoms) or an aryl (preferably phenyl).

Specific examples of preferred hydrolyzable silane derivatives include methyltrimethoxysilane, methyltriethoxysilane, methyltripropoxysilane, methyltributoxysilane, ethyltrimethoxysilane, ethyltriethoxysilane, ethyltripropoxysilane, ethyltributoxysilane, phenyltrimethoxysilen, phenyltriethoxysilane, phenyltripropoxysilane, phenyltributoxysilane, dimethyldimethoxysilane, dimethyldiethoxysilane, dimethyldipropoxysilane, dimethyldibutoxysilane, diethyldimethoxysilane, diethyldiethoxysilane, diethyldipropoxysilane, diethyldibutoxysilane, phenylmethyldimethoxysilane, phenylmethyldiethoxysilane, phenylmethyldipropoxysilane, phenylmethyldibutoxysilane, n-propyltrimethoxysilane, n-propyltriethoxysilane, n-propyltripropoxysilane, n-propyltributoxysilane, γ-glycosidoxypropyltrimethoxysilane, and γ-acryloxypropyltrimethoxysilane.

The siloxane may be prepared by partial hydrolysis and dehydropolycondensation of the hydrolyzable silane derivative, or by dehydropolycondensation of a partial hydrolyzate of the hydrolyzable silane derivative with a partial hydrolyzate of tetramethoxysilane, tetrasthoxysilane, tetrapropoxysilane, tetrabutoxysilane, diethoxydimethoxysilane or the like.

The silicone resin prepared by partial hydrolysis or dehydropolycondensation of the above precursor according to the following method is represented by the following average composition formula:

RₚSiO_{(4-p)/2}

wherein R is as defined above;
X is an alkoxy group or a halogen atom; and
p is a number satisfying 0 < p < 2.

The content of the precursor in the composition according to the present invention may be suitably determined. For example, in terms of the silica content based on one part by weight of the photocatalytic particle, the upper limit of the precursor content is preferably 10 parts by weight, more preferably 5 parts by weight, most preferably 1 part by weight, and the lower limit of the precursor content is preferably 0.05 part by weight, more preferably 0.1 part by weight, and most preferably 0.2 part by weight.

The solvent contained in the composition according to the present invention is not limited so far as it can stably disperse the photocatalytic particles and the precursor and a hydrophilified surface is finally provided. Examples of solvents usable herein include water, an organic solvent, and a mixed solvent composed of water and an organic solvent. Water, an alcohol, or a mixed solvent composed of water and an alcohol is particularly preferred.

The content of the solvent in the composition according to the present invention is preferably such that the total of the weight of the photocatalytic particle and the weight, in terms of silica, of the precursor (this total content being often referred to as "solid content") is brought to 0.01 to 5% by weight in the composition. The solid content can be simply determined as follows. The composition is heated at 400 to 500°C for 3 hr to evaporate the liquid component, and the weight of the residual solid component is then measured, followed by calculation of the percentage of the weight of solid component in the weight of the composition. When the solid content exceeds 5% by weight, the surface with the composition applied thereto disadvantageously has an appearance suffering from haze development or has interference fringes. The upper limit of the solid content is more preferably 1% by weight. When the solid content is less than 0.01% by weight, there is a possibility that a surface having satisfactory hydrophilicity cannot be efficiently formed. The lower limit of the solid content is more preferably 0.05% by weight, most preferably 0.1% by weight. In the composition of the present invention, the amount of the solvent is determined so that the solid content of the photocatalyst particle falls within the above range.

According to a preferred embodiment of the present invention, use of an alcohol, which has a molecular weight of 60 to 300, preferably a molecular weight of 60 to 100 and is liquid at room temperature, is preferred.

Specific examples of preferred alcohols usable herein include methanol, ethanol, n-propanol, isopropanol, t-butanol, isobutanol, n-butanol, 2-methylpropanol, pentanol, ethylene glycol, monoacetone alcohol, diacetone alcohol, ethylene glycol monomethyl ether, 4-hydroxy-4-methyl-2-pentanone, dipropylene glycol, propylene glycol, tripropylene glycol, 1-ethoxy-2-propanol, 1-butoxy-2-propanol, 1-propoxy-2-propanol, propylene glycol monomethyl ether, dipropylene glycol monomethyl ether, dipropylene glycol monoethyl ether, tripropylene glycol monomethyl ether, and 2-butoxyethanol.

A preferred example of the silica coating precursor is a silicate represented by the average composition formula:

SiX_{q}O_{(4-q)/2}

wherein X represents an alkoxy group or a halogen atom and q is a number satisfying 0 < q < 4.

Another preferred example of the silica coating precursor is a tetrafunctional, hydrolyzable silane derivative represented by the general formula:

SiX₄

wherein R is as defined above; and
X represents an alkoxy group or a halogen atom.

Specific examples of preferred tetrafunctional, hydrolyzable silane derivatives usable herein include tetramethoxysilane, tetraethoxysilane, tetrapropoxysilane, tetrabutoxysilane, and diethoxydimethoxysilane.

Specific examples of preferred silicates usable herein include partial hydrolyzates and dehydropolycondensation products of the tetrafunctional, hydrolyzable silane derivatives.

According to a preferred embodiment of the present invention, the coating liquid is fixed onto the substrate in the temperature range of from room temperature to about 150°C. Therefore, for example, addition of a precursor of a thermosetting resin, an ultraviolet curable resin, or a moisture-curable resin is possible. Further, addition of a silicone resin to the above resin is preferred from the viewpoint of the resistance to oxidation of the photocatalyst and the lightfastness.

Water, an alcohol and the like may be used as the solvent for the coating liquid. Particularly preferred are liquid alcohols having a molecular weight of 60 to 300. Since the evaporation rate of these alcohols is suitably slow, a variation in dispersiblity of the coating liquid due to the evaporation of the solvent can be inhibited, it is possible to form a transparent, even coating.

Examples of suitable liquid alcohols having a molecular weight of 60 to 300 usable herein include n-propanol, isopropanol, t-butanol, isobutanol, n-butanol, 2-methylpropanol, pentanol, ethylene glycol, monoacetone alcohol, diacetone alcohol, ethylene glycol monomethyl ether, 4-hydroxy-4-methyl-2-pentanone, dipropylene glycol, propylene glycol, tripropylene glycol, 1-ethoxy-2-propanol, 1-butoxy-2-propanol, 1-propoxy-2-propanol, propylene glycol monomethyl ether, dipropylene glycol monomethyl ether, dipropylene glycol monoethyl ether, and tripropylene glycol monomethyl ether.

The coating liquid may comprise, in addition to the above components, a surfactant, a polymerization curing catalyst, a hydrolysis catalyst, a levelling agent, an antimicrobial metal, a pH adjustor, a perfume, a preservative and the like.

Polymerization catalysts usable herein include aluminum compounds, such as aluminum chelate, aluminum acetyl acetonate, aluminum perchlorate, aluminum chloride, aluminum isobutoxide, and aluminum isopropoxide; titanium compounds, such as tetraisopropyl titanate and tetrabutoxy titanate; basic compounds, such as sodium hydroxide, lithium hydroxide, potassium hydroxide, sodium methylate, sodium acetate, sodium formate, potassium acetate, potassium formate, potassium propionate, and tetramethyl ammonium hydroxide; amine compounds, such as n-hexylamine, tributylamine, diazabicycloundecene, ethylenediamine, hexanediamine, diethylenetriamine, tetraethylenepentamine, triethylenetetramine, ethanolamines, γ-aminopropyltrimethoxysilane, γ-aminopropylmethyldimethoxysilane, γ-(2-aminomethyl)-aminopropyltrimethoxysilane, and γ-(2-aminomethyl)-aminopropylmethyldimethoxysilane; tin compounds, such as tin acetyl acetonate, and dibutyltin octylate; metal-containing compounds, such as cobalt octylate, cobalt acetyl acetonate, and iron acetyl acetonate; and acidic compounds, such as phosphoric acid, nitric acid, phthalic acid, p-toluenesulfonic acid, and trichloroacetic acid.

Suitable hydrolysis catalysts usable herein include nitric acid, hydrochloric acid, acetic acid, sulfuric acid, sulfonic acid, maleic acid, propionic acid, adipic acid, fumaric acid, phthalic acid, valeric acid, lactic acid, butyric acid, citric acid, malic acid, picric acid, formic acid, carbonic acid, and phenol, the above catalysts having a pH of 2 to 5.

Levelling agents usable herein include diacetone alcohol, ethylene glycol monomethyl ether, 4-hydroxy-4-methyl-2-pentanone, dipropylene glycol, tripropylene glycol, 1-ethoxy-2-propanol, 1-butoxy-2-propanol, propylene glycol monomethyl ether, 1-propoxy-2-propanol, dipropylene glycol monomethyl ether, dipropylene glycol monoethyl ether, and tripropylene glycol monoethyl ether.

Antimicrobial metals which may be added to the coating liquid include metals, such as silver, copper, and zinc. The coating with the above metal added thereto can kill bacteria and molds deposited on the surface even in a dark place.

Platinum group metals, such as platinum, palladium, ruthenium, rhodium, iridium, and osmium, may be added to the coating liquid. Addition of the above metal enables the formed coating to enhance the redox activity of the photocatalyst and can improve the degradation of organic soil and degradation of organic gases and offensive odor.

The coating liquid may further comprise a surfactant. Examples of preferred surfactants usable herein include those described above in connection with the undercoat. Addition of the surfactant can improve the wettability of the surface of the substrate by the coating liquid.

Basically, the coating liquid of the present invention may be coated on the surface of a substrate to form a coating which is then cured to form a photocatalytically hydrophilifiable coating. The coating liquid may be coated by any suitable method, such as spray coating, dip coating, flow coating, spin coating, roll coating, brush coating, and sponge coating. Curing may be carried out by heating, standing at room temperature, ultraviolet irradiation or the like.

The photocatalytically hydrophilifiable coating formed on the surface of the substrate is rendered hydrophilic in response to photoexcitation of the photocatalyst. In this case, in order to highly hydrophilify the surface of the substrate in photoexcitation of the photocatalyst, the irradiation intensity of excitation light may be not less than 0.001 mW/cm², preferably not less than 0.01 mW/cm², more preferably not less than 0.1 mW/cm².

When the photocatalytic oxide is anatase form of titanium oxide, rutile form of titanium oxide, zinc oxide, or strontium titanate, sunlight, a room lamp, a fluorescent lamp, a mercury lamp, an incandescent lamp, a xenon lamp, a high pressure sodium lamp, a metal halide lamp, a BLB lamp and the like may be suitably utilized as the light source for photoexcitation of the photocatalyst. On the other hand, when the photocatalytic oxide is tin oxide, a bactericidal lamp, a BLB lamp and the like may be suitably used.

Although the thickness of the photocatalytically hydrophilifiable coating formed on the surface of the member may be suitably determined in such a thickness range that the hydrophilicity is developed, the thickness is preferably not more than 0.4 µm, more preferably not more than 0.2 µm. The photocatalytically hydrophilifiable coating having the above thickness is substantially transparent and can improve the abrasion resistance.

As described in PCT/WO 96/29375, when the surface of the substrate with a photocatalytically hydrophilifiable coating formed thereon is in such a state that the contact angle of the coating with water is not more than 10° , even though moisture or steam in the air condenses, the condensed water is likely to form a uniform water film without forming discrete water drops. Therefore, no light scattering fog is likely to be created on the surface of the member. Likewise, exposure of windowpanes, rearview mirrors for vehicles, windshields for vehicles, eyeglass lenses, and shields of helmets to rainfall or a spray of water does not result in the formation of discrete water droplets which obstruct the view. This permits a high level of view and visibility to be ensured, which in turn ensures traffic safety for vehicles and improves the efficiency of various works and activities.

Likewise, as described in PCT/WO 96/29375, when the surface of the substrate is in such a state that the contact angle thereof with water is not more than 20° , both types of contaminants, that is, hydrophobic contaminants including municipal dust, combustion products, such as carbon black contained in an exhaust gas of automobiles, fats and oils, and components eluted from sealants, and contaminants of inorganic clay materials, are less likely to adhere onto the hydrophilified surface and, even when adhered thereon, can be easily washed away by rainfall or washing with water.

The high hydrophilicity of the surface of the substrate and maintaining the hydrophilicity can exhibit, in addition to the antifogging and surface cleaning effects, antistatic effect (effect of preventing deposition of dust), heat insulating effect, effect of preventing deposition of air bubbles under the water, effect of improving the efficiency in a heat exchanger, and effect of improving biocompatibility.

Examples of substrates to which the pretreatment according to the present invention can be applied and wherein antifogging effect can be expected in the photocatalytically hydrophilifiable coating formed thereon include mirrors, such as rearview mirrors for vehicles, bathroom mirrors, lavatory mirrors, dental mouth mirrors, reflecting mirrors for roads; lenses, such as eyeglass lenses, optical lenses, lighting lenses, lenses for semiconductors, lenses for copying machines, rearview camera lenses for vehicles; prisms; windowpanes for building or observation; windowpanes for vehicles, such as automobiles, railway vehicles, aircrafts, watercrafts, submarines, snowmobiles, ropeway gondolas, pleasure garden gondolas and spacecrafts; windshields for vehicles, such as automobiles, motorcycles, railway vehicles, aircrafts, watercrafts, submarines, snow cars, snowmobiles, ropeway gondolas, pleasure garden gondolas and spacecrafts; goggles for protection, goggles for sports, shields of masks for protection, shields of masks for sports, shields of helmets, glasses of display case for frozen foods, glasses of display cases for thermally kept foods, such as Chinese bun; covers for measuring instruments, covers of rearview camera lenses for vehicles, converging lenses for laser dental treatment equipments, covers of sensors for laser beam detection, such as sensors for vehicular gaps, covers of infrared sensors; filters of cameras, and films, sheets, seals and the like for application on the surface of the above articles. These substrates would be generally made of glass, plastics and the like.

Examples of substrates to which the pretreatment according to the present invention can be applied and wherein surface cleaning effect can be expected in the photocatalytically hydrophilifiable coating formed thereon include building materials, exterior of buidlings, interior of buildings, sashes, windowpanes, structural members, exterior and coating of vehicles, exterior of machineries and articles, dustproof covers and coatings, traffic signs, various display devices, advertising towers or poster columns, noise barriers for roads, noise barriers for rail roads, bridges, exterior and coating of guard rails, interior facing and coating of tunnels, insulators, cover for solar cells, covers for solar energy collectors of solar water heaters, vinyl plastic hothouses, covers for lighting of vehicles, households, stools, bath tubs, wash basins, lighting equipment, covers for lighting, kitchenwares, tablewares, dishwashers, dishdryers, sinks, cooking ranges, kitchen hoods, ventilation fans, and films, sheets, seals and the like for application on the surface of the above articles. These substrates would be generally made of metals, ceramics, glasses, plastics, woods, stones, cements, concretes, fibers, woven fabrics, and combinations of the above materials and laminates of the above materials.

Examples of substrates to which the pretreatment according to the present invention can be applied and wherein the effect of accelerating drying can be expected in the photocatalytically hydrophilifiable coating formed thereon include bodies of automobiles, windows, paved roads, and films, sheets, seals and the like for application on the surface of the above articles. These substrates would be generally made of metals, ceramics, glasses, plastics, woods, stones, cements, concretes, fibers, woven fabrics, and combinations of the above materials and laminates of the above materials.

Further, examples of substrates to which the pretreatment according to the present invention can be applied and wherein antistatic effect can be expected in the photocatalytically hydrophilifiable coating formed thereon include cathode-ray tubes; magnetic recording media; optical recording media; photomagnetic recording media; audio tapes; video tapes; analog records; housings, components, exterior and coatings of domestic electric appliances; housings, components, exterior and coatings of office automation equipment; building materials; exterior of the buidlings; interior of the buildings; sashes; windowpanes; structural members; exterior and coating of vehicles; exterior of machineries and articles; dustproof covers and coatings; and films, sheets, seals and the like for application on the surface of the above articles. These substrates would be generally made of metals, ceramics, glasses, plastics, woods, stones, cements, concretes, fibers, woven fabrics, and combinations of the above materials and laminates of the above materials.

### Photocatalytically hydrophilifiable coating-forming set

As described above, according to one aspect of the present invention, there are provided a cleaning agent and an undercoating composition for pretreatment of the surface of a substrate on which a photocatalytically hydrophilifiable coating is to be formed. According to another aspect of the present invention, there are provided a set comprising the above cleaning agent and the undercoating composition, and a set comprising the above cleaning agent and/or undercoating composition and the above coating agent capable of forming a photocatalytically hydrophilifiable coating.

As described above, for the body of vehicles, such as automobiles, satisfactory cleaning with a cleaning agent is desired. When the undercoating composition according to the present invention is used, the degree of cleaning of the body surface is not necessarily required to be high. In other words, it is desired that users can get the cleaning agent and the undercoating composition as a set. Further, it is desired that users can get the cleaning agent, the undercoating composition, and the coating liquid capable of forming the above photocatalytically hydrophilifiable coating as a set. The present invention provides a set comprising a cleaning agent and an undercoating composition, and a set comprising a cleaning agent, an undercoating composition, and a coating agent capable of forming the above photocatalytically hydrophilifiable coating.

On the other hand, in the case of members where a high degree of transparency is required, such as glass surface, cleaning of the surface with the cleaning agent as much as possible followed by formation of the photocatalytically hydrophilifiable coating thereon is desired rather than the utilization of the undercoating composition. In this case, it is preferred that a set comprising a cleaning agent and a coating agent capable of forming the above photocatalytically hydrophilifiable coating be provided for users.

### [Examples]

### Example A

### Examples A1 to A9: Application to windowpane

### Example A1

The periphery of a partial area of a window facing the north side was masked to prevent scattering of a coating composition towards the periphery of the window. Thereafter, the window was wiped with a waste impregnated with an aqueous cleaning agent (pH 9.5) containing a sodium alkylbenzenesulfonate and a fatty acid alkanolamide as a surfactant to remove deposited soil. Subsequently, the window was wiped with a water-impregnated waste to remove the cleaning agent, and water deposited on the window was removed by means of a wiper and with a dry waste.

A photocatalytic coating liquid ST-K 01 manufactured by Ishihara Sangyo kaisha Ltd. (a coating composition comprising 8 parts by weight of titanium oxide particles, 2 parts by weight of an alkyl silicate, 54.8 parts by weight of an aqueous nitric acid solution, 28 parts by eight of methanol, and 7.2 parts by weight of propanol) and a photocatalytic coating liquid ST-K 03 manufactured by Ishihara Sangyo kaisha Ltd. (a coating composition comprising 5 parts by weight of titanium oxide particles, 5 parts by weight of an alkyl silicate, 54.8 parts by weight of an aqueous nitric acid solution, 28 parts by weight of methanol, and 7.2 parts by weight of propanol) were mixed together in a ratio of 1 : 1, and the mixed liquid was diluted 25 times with 2-propanol to prepare a photocatalytic coating liquid (I).

The photocatalytic coating liquid (I) was spray-coated at a coverage of 105 g/m² onto the above cleaned windowpane surface by means of an air gun of 0.8 mm⌀, followed by drying at 20°C for 20 min to cure the coating, thereby preparing sample A1.

For comparison, the photocatalytic coating liquid (I) was spray-coated, on a window facing the north side in the same manner as described above, except that the window has not been subjected to the above cleaning treatment. The coating was dried, at 20°C for 20 min, thereby curing the coating to prepare a sample A2.

For samples A1 and A2, the contact angle with water and the appearance were examined.

The windowpane sample was allowed to stand for two days after the formation of the coating and exposed to sunlight so that the coating was exposed to ultraviolet light. Thereafter, the windowpane was removed, and the contact angle thereof with water was measured with a contact angle goniometer (CA-X150, manufactured by Kyowa Interface Science Co., Ltd.). The contact angle was measured 30 sec after dropping of a water droplet through a microsyringe on the surface of the sample.

As a result, the contact angle of sample A1 with water was about 30° , whereas sample A2 was superhydrophilified to a contact angle thereof with water of 0° .

The surface of sample A2 became somewhat opaque. By contrast, sample A2 remained transparent.

### Example A2

Sample A3 was prepared in the same manner as in Example A1, except that the window was wiped with a waste impregnated with an aqueous cleaning, agent (pH 11.9) containing a nonionic surfactant and an alkali inorganic builder to remove deposited soil.

For this sample, the contact angle with water and the appearance were examined in the same manner as in Example A1. As a result, it was found that the sample was superhydrophilified to a contact angle thereof with water of 0° . Further, the sample remained transparent.

### Example A3

Sample A4 was prepared in the same manner as in Example A1, except that the window was wiped with a waste impregnated with a cleaning agent (pH 6.9) containing a nonionic surfactant and a levelling agent as additives and petroleum and water as solvents to remove deposited soil.

For this sample, the contact angle with water and the appearance were examined in the same manner as in Example A1. As a result, it was found that the sample was superhydrophilified to a contact angle thereof with water of 0° . Further, the sample remained transparent.

### Example A4

Sample A5 was prepared in the same manner as in Example A1, except that the window was wiped with a waste impregnated with an aqueous cleaning agent (pH 7.9) containing a nonionic surfactant and an anionic surfactant as additives to remove deposited soil.

For this sample, the contact angle with water and the appearance were examined in the same manner as in Example A1. As a result, it was found that the sample was superhydrophilified to a contact angle thereof with water of 0° . Further, the sample remained transparent.

### Example A5

Sample A6 was prepared in the same manner as in Example A1, except that a window facing the west side was wiped with a waste impregnated with an aqueous cleaning agent (pH 11.8) containing a nonionic surfactant and an amine as additives to remove deposited soil.

For this sample, the contact angle with water and the appearance were examined in the same manner as in Example A1. As a result, it was found that the sample was superhydrophilified to a contact angle thereof with water of 0° . Further, the sample remained transparent.

### Example A6

Sample A7 was prepared in the same manner as in Example A1, except that a window facing the west side was wiped with a waste impregnated with a cleaning agent composed mainly of an aqueous electrolytic alkali (Hungry Water, manufactured by Paint House) to remove deposited soil.

For this sample, the contact angle with water and the appearance were examined in the same manner as in Example A1. As a result, it was found that the sample was superhydrophilified to a contact angle thereof with water of 0° . Further, the sample remained transparent.

### Example 7

Sample A8 was prepared in the same manner as in Example A1, except that a window facing the west side was wiped with a waste impregnated with a cleaning agent containing a cerium oxide abrasive to remove deposited soil.

For this sample, the contact angle with water and the appearance were examined in the same manner as in Example A1. As a result, it was found that the sample was superhydrophilified to a contact angle thereof with water of 0° . Further, the sample remained transparent.

### Example 8

The periphery of a partial area of a window facing the west side was masked to prevent scattering of a coating composition towards the periphery of the window. Thereafter, the window was wiped with a water-impregnated waste and then with an n-hexane-impregnated waste to remove deposited soil. Further, the solvent deposited on the window was removed by a dry waste.

The photocatalytic coating liquid (1) prepared in Example A1 was coated on a windowpane surface subjected to the above cleaning treatment in the same manner as in Example A1 to form a coating, thereby preparing sample A9.

For this sample, the contact angle with water and the appearance were examined in the same manner as in Example A1. As a result, it was found that the sample was superhydrophilified to a contact angle thereof with water of 0° . Further, the sample remained transparent.

### Example A9

Sample A10 was prepared in the same manner as in Example A1, except that a window facing the west side was wiped with a waste impregnated with a cleaning agent comprising a basic silica sol, monoethanolamine, a nonionic surfactant, a glycol solvent, ethanol, and water to remove deposited soil.

For this sample, the contact angle with water and the appearance were investigated in the same manner as in Example A1. As a result, it was found that the sample was superhydrophilified to a contact angle thereof with water of 0° . Further, the sample remained transparent.

### Examples A10 to A12: Application to windowpane with permanent soil deposited thereon

### Example A10

The periphery of a coating face of a window located near a spouting port of an outdoor unit of an conditioner facing the north side was masked to prevent scattering of a coating composition around the periphery of the coating face. Thereafter, color deposited soil and permanent soil were removed with a waste impregnated with a cleaning agent containing an acid ammonium fluoride as an additive. Subsequently, the window was washed with tap water and then wiped with a water-impregnated waste to remove the cleaning agent, and water deposited on the window was removed by means of a wiper and a dry waste.

The photocatalytic coating liquid (I) prepared in Example A1 was coated on the windowpane surface, subjected to the cleaning treatment, in the same manner as in Example A1 to form a coating, thereby preparing sample A11.

For comparison, the photocatalytic coating liquid (I) was coated on a window facing the north side in the same manner as described above, except that the window was not subjected to the cleaning treatment. The coating was dried to prepare sample A12.

For these samples, the contact angle with water and the appearance were examined in the same manner as in Example A1. As a result, it was found that both sample A11 and sample A12 were superhydrophilified to a contact angle thereof with water of 0° . For the appearance, however, white soil was observed for sample A12, whereas sample A11 remained transparent.

### Example A11

Sample A13 was prepared in the same manner as in Example A10, except that the color deposited soil and permanent soil were removed with a waste impregnated with a cleaning agent containing a cerium oxide abrasive as an additive.

For this sample, the contact angle with water and the appearance were examined in the same manner as in Example A1. As a result, it was found that the sample was superhydrophilified to a contact angle thereof with water of 0° . Further, the sample remained transparent.

### Example A12

Sample A14 was prepared in the same manner as in Example A10, except that the color deposited soil and permanent soil were removed with a waste impregnated with a cleaning agent containing a silicic acid mineral abrasive as an additive (TOTO powder, manufactured by TOTO, LTD.).

For this sample, the contact angle with water and the appearance were examined in the same manner as in Example A1. As a result, it was found that the sample was superhydrophilified to a contact angle thereof with water of 0° . Further, the sample remained transparent.

### Examples A13 to A16: Application to windowpane with soil attributable to silicone sealing agent deposited thereon

### Example A13

The periphery of a coating face of a window located below the lower part of a silicone sealant facing the north side was masked to prevent scattering of a coating composition around the periphery of the coating face. Thereafter, color deposited soil and sealant deposited soil were removed with a waste impregnated with a cleaning agent containing an acid ammonium fluoride as an additive. Subsequently, the window was washed with tap water and then wiped with a water-impregnated waste to remove the cleaning agent, and water deposited on the window was removed by means of a wiper and a dry waste.

The photocatalytic coating liquid (I) prepared in Example A1 was coated on the windowpane surface subjected to the cleaning treatment in the same manner as in Example A1 to form a coating, thereby preparing sample A15.

For comparison, the photocatalytic coating liquid (I) was coated on a window facing the north side in the same manner as described above, except that the window was not subjected to cleaning treatment. The coating liquid did not adhere to and was repelled by the surface of the substrate and hence could not form an even coating. Thereafter, drying was carried out at 20°C for 20 min to cure the coating, thereby preparing sample A16.

For these samples, the contact angle with water was measured in the same manner as in Example A1. As a result, it was found that the contact angle of sample A16 with water was 80° , whereas sample A15 was superhydrophilified to a contact angle thereof with water of 0° .

### Example A14

Sample A17 was prepared in the same manner as in Example A13, except that the color deposited soil and sealant deposited soil were removed with a waste impregnated with a cleaning agent containing a cerium oxide abrasive as an additive.

For this sample, the contact angle with water was examined in the same manner as in Example A1. As a result, it was found that the sample was superhydrophilified to a contact angle thereof with water of 0° .

### Example A15

Sample A18 was prepared in the same manner as in Example A13, except that, after the window was wiped with a waste impregnated with a cleaning agent containing a cerium oxide abrasive as an additive, it was wiped with a dry waste to remove the cleaning agent, wiped with a waste impregnated with a cleaning agent composed mainly of an aqueous electrolytic alkali (Hungry Water, manufactured by Paint House), and then wiped with a water-impregnated waste to remove the cleaning agent.

For this sample, the contact angle with water was measured in the same manner as in Example A1. As a result, it was found that the sample was superhydrophilified to a contact angle thereof with water of 0° .

### Example A16

Sample A19 was prepared in the same manner as in Example A13, except that the color deposited soil and sealant deposited soil were removed with a waste impregnated with a cleaning agent containing a silicic acid mineral abrasive as an additive (TOTO powder, manufactured by TOTO, LTD.).

For this sample, the contact angle with water was measured in the same manner as in Example A1. As a result, it was found that the sample was superhydrophilified to a contact angle thereof with water of 0° .

### Examples A17 and A18: Application to mirror with soil attributable to sparingly soluble calcium salt deposited thereon

### Example A17

The periphery of a coating face of a lavatory mirror with a surface whitened due to deposition of soil attributable to a sparingly soluble calcium salt was masked to prevent scattering of a coating composition around the periphery of the coating face. Thereafter, the calcium salt deposited soil was removed with a waste impregnated with an aqueous hydrochloric acid solution (pH 2). Subsequently, the window was washed with tap water and then wiped with a water-impregnated waste to remove the cleaning agent, and water deposited on the window was removed by means of a wiper and a dry waste.

A photocatalytic coating liquid ST-K 01 manufactured by Ishihara Sangyo kaisha Ltd. was diluted 25 times with 2-propanol to prepare a photocatalytic coating liquid (II). The photocatalytic coating liquid (II) was spray-coated at a coverage of 105 g/m² onto the above cleaned windowpane surface by means of an air gun of 0.8 mm⌀, followed by drying at 20°C for 20 min to cure the coating, thereby preparing sample A20.

For sample A20, the wettability with water and the appearance were investigated. The wettability with water was evaluated by spraying water on the mirror by means of a hand spray.

As a result, the sprayed water formed an even water film without formation of water droplets on the window. The sample remained transparent.

### Example A18

Sample A21 was prepared in the same manner as in Example A17, except that the calcium salt deposited soil was removed with a waste impregnated with a cleaning agent containing a cerium oxide abrasive (Kiirobin Spray, manufactured by Prostaff) as an additive.

For this example, the wettability with water and the appearance were investigated in the same manner as in Example A17. As a result, the sprayed water formed an even water film without formation of water droplets on the window. The sample remained transparent.

### Examples A19 and A20: Application to window glass of automobile

### Example A19

A rear window of an automobile was masked to prevent scattering of a coating composition around the coating face and wiped with a waste impregnated with a cleaning agent containing a cerium oxide abrasive (Kiirobin Spray, manufactured by Prostaff) as an additive to remove deposited soil. Subsequently, the window was wiped with a water-impregnated waste to remove the cleaning agent and then wiped with a wiper and a dry waste to remove water deposited on the window.

A photocatalytic coating liquid ST-K 01 manufactured by Ishihara Sangyo kaisha Ltd. was diluted 50 times with 1-propanol to prepare a photocatalytic coating liquid (III). The photocatalytic coating liquid (III) was spray-coated at a coverage of 30 g/m² onto the above cleaned window surface by means of an air gun of 0.8 mm⌀, followed by drying at 20°C for 20 min to cure the coating, thereby preparing sample A22.

This sample was exposed to sunlight for two days so that ultraviolet light was applied to the sample. For this sample, the wettability with water and the appearance were examined in the same manner as in Example A17. As a result, the sprayed water formed an even water film on the window without formation of water droplets. The sample remained transparent.

### Example A20

A rear window of an automobile was masked to prevent scattering of a coating composition around the coating face. Thereafter, the window was wiped with a waste impregnated with a cleaning agent comprising a basic silica sol, monoethanolamine, a nonionic surfactant, a glycol solvent, ethanol, and water to remove deposited soil.

A photocatalytic coating liquid ST-K 01 manufactured by Ishihara Sangyo kaisha Ltd. was diluted 50 times with a mixed solvent comprising 1-propanol and a levelling agent (comprising 90 parts by weight of 1-propanol and 10 parts by weight of propylene glycol ethyl ether) to prepare a photocatalytic coating liquid (IV). The photocatalytic coating liquid (IV) was coated by means of a nonwoven fabric of polypropylene on the surface of the cleaned window, and the coating dried at 20°C for 20 min to cure the coating, thereby preparing sample A23.

This sample was exposed to sunlight for two days so that ultraviolet light was applied to the sample. For this sample, the wettability with water and the appearance were investigated in the same manner as in Example A17. As a result, the sprayed water formed an even water film on the window without formation of water droplets. The sample remained transparent.

### Examples A21 to A24: Application to body of automobile

### Example A21

The bonnet of an automobile was washed with a sponge for cleaning an automobile while flushing the bonnet with water to remove mud soil. Thereafter, the surface of a bonnet was lightly rubbed with a liquid compound (manufactured by Musashi Horuto) using a wax application sponge. The compound was removed with a waste before the compound did not dry yet, followed by drying of the bonnet.

A photocatalytic coating liquid ST-K 01 manufactured by Ishihara Sangyo kaisha Ltd. was diluted 100 times with a solvent (a mixed solution composed of 9 parts by weight of 2-propanol and 1 part by weight of diacetone alcohol) to prepare a photocatalytic coating liquid (V). The photocatalytic coating liquid (V) was spray-coated at a coverage of 30 g/m² by means of an air gun of 0.8 mm⌀ onto the cleaned bonnet, followed by drying at 20°C for 20 min to cure the coating, thereby preparing sample 24.

For comparison, the mud soil was removed with a sponge for cleaning an automobile while flushing the bonnet of an automobile with water, and the photocatalytic coating liquid (V) was coated on the bonnet of the automobile in the same manner as described above, except that the compound treatment was not carried out, followed by drying to prepare sample A25.

For samples A24 and A25, the appearance immediately after the coating was compared. As a result, it was found that for sample A24, the appearance was the same as that before the coating, whereas for sample A25, the coating became opaque.

Sample A24 was exposed to sunlight for two days so that ultraviolet light was applied to sample A24. Thereafter, water was sprayed by means of a hand spray. As result, the sprayed water was evenly spread without formation of water droplets.

### Example A22

The bonnet of an automobile was cleaned in the same manner as in Example A21.

An undercoating liquid prepared by diluting a colloidal silica sol (an organosilica sol, IPA-ST, manufactured by Nissan Chemical Industries Ltd.) with isopropanol to a solid content of 0.3% by weight was coated on the cleaned bonnet by means of a sponge.

The coating liquid (V) prepared in Example A21 was coated on the bonnet in the same manner as in Example A21, followed by drying to prepare sample A26.

For comparison, for the bonnet of an automobile, the mud soil was removed with a sponge for cleaning an automobile while flushing the bonnet of an automobile with water, and the photocatalytic coating liquid (V) was coated on the bonnet of the automobile in the same manner as in Example A21, except that the above undercoating liquid was coated by means of a sponge on the bonnet not subjected to the compound treatment, followed by drying to prepare sample A27.

For these samples, the appearance immediately after the coating was compared. As a result, it was found that for sample A26, the appearance was the same as that before the coating, whereas for sample A27, the coating became opaque.

Sample A26 was exposed to sunlight for three hr so that ultraviolet light was applied to sample A26. Thereafter, water was sprayed by means of a hand spray. As result, the sprayed water was evenly spread without formation of water droplets.

### Example A23

The bonnet of an automobile was washed by applying water to remove mud soil. Thereafter, the bonnet was cleaned by lightly rubbing the bonnet with an aqueous cleaning agent containing an inorganic fine particle abrasive and an anionic surfactant as additives using an automobile cleaning sponge. The bonnet was satisfactorily washed with water, wiped with a dry waste, and dried.

The bonnet was coated with the undercoating liquid prepared in Example A22 by wiping with a sponge.

Further, the bonnet was coated with the coating liquid (V) prepared in Example A21 in the same manner as in Example A21, followed by drying to prepare sample A28.

The appearance immediately after the coating of the sample was the same as that before the coating.

Further, the sample was exposed to sunlight for 3 hr so that ultraviolet light was applied to the sample. Thereafter, water was sprayed by means of a hand spray. As result, the sprayed water was evenly spread without formation of water droplets.

For comparison, a sample was prepared in the same manner as described above, except that the undercoating liquid prepared in Example A22 was not coated. This sample was exposed to sunlight for 3 hr, and water was then sprayed thereon. As a result, water droplets were formed, indicating that the hydrophilification was unsatisfactory. However, when the sample was allowed to stand out of doors for two days and then sprayed with water, the sprayed water was evenly spread without formation of water droplets.

### Example A24

The bonnet of an automobile was washed while applying water on the bonnet to remove mud soil. Thereafter, the bonnet was cleaned with an aqueous cleaning agent (pH 11.9) containing a nonionic surfactant and an alkali inorganic builder as additives by lightly rubbing the bonnet using an automobile cleaning sponge. The bonnet was then satisfactorily washed with water, water was wiped off with a dry waste, and the bonnet was then dried.

The undercoating liquid prepared in Example A22 was sponge-coated on the bonnet.

Further, the bonnet was coated with the coating liquid (V) prepared in Example A21 in the same manner as in Example A21, and the coating was dried to prepare sample A29.

The appearance immediately after the coating of the sample was the same as that before the coating.

Further, the sample was exposed to sunlight for 3 hr so that ultraviolet light was applied to the sample. Thereafter, water was sprayed by means of a hand spray. As result, the sprayed water was evenly spread without formation of water droplets.

### Example A25: Application to windowpane with soil attributable to silicone sealing material deposited thereon

### Example A25

The periphery of a partial area of a window located at the lower part of a silicone sealant facing the north side was masked to prevent scattering of a coating composition around the periphery of the coating face. Thereafter, the window was wiped with a waste impregnated with an aqueous cleaning agent (pH 9.5) containing a sodium alkylbenzenesulfonate and a fatty acid alkanolamide as surfactants as additives to remove color deposited soil. Subsequently, the window was washed with tap water and then wiped with a water-impregnated waste to remove the cleaning agent, and water deposited on the window was removed by means of a wiper and a dry waste.

Thereafter, the glass surface was irradiated with light from a 500 W mercury lamp.

The cleaned glass surface was coated with the photocatalytic coating liquid (1) prepared in Example A1 in the same manner as in Example A1 to form a coating, thereby preparing sample A30.

For this sample, the contact angle with water was measured in the same manner as in Example A1. As a result, it was found that the sample was superhydrophilified to a contact angle with water of 0° .

### Example B1

A composition comprising 1 part by weight of a water-dispersed colloidal silica added to a mixed solution composed of 4 parts by weight of γ-glycoxidepropyltrimethoxysliane and 5 parts by weight of trimethoxysilane (solvent: ethanol) was prepared. This composition was coated on a polyethylene terephthalate film, and the coating was dried.

The photocatalytic coating liquid (I) prepared in Example A1 was coated at a coverage of 105 g/m² by means of an air gun of 0.8 mm⌀ onto the film, followed by drying at 20°C for 3 hr to cure the coating, thereby preparing sample B1.

A cellophane tape was applied to the surface of the sample and rapidly peeled off. As a result, no clear difference in appearance of the sample was observed between before application of the tape and after the separation of the tape.

Further, the sample was exposed to sunlight for 3 hr so that ultraviolet light was applied to the sample. Thereafter, water was sprayed. As a result, the sprayed water was evenly spread without formation of water droplets.

For this sample, the contact angle of the surface thereof with water was measured. As a result, it was found that the sample was superhydrophilified to a contact angle with water of 0° .

### Example B2

A commercially available transparent acrylic sheet (polymethyl methacrylate) was provided as a substrate.

One part by weight of ethyl silicate 40 (manufactured by Colcoat Co., Ltd.), one part by weight of ethyl silicate 28 (manufactured by Colcoat Co., Ltd.), 15 parts by weight of methanol, 0.1 part by weight of 60% nitric acid, and 2.9 parts by weight of distilled water were mixed together, and the mixture was stirred at room temperature for about 16 hr to prepare a solution. 20 parts by weight of the solution was mixed with 80 parts by weight of a solvent (a mixed solvent composed of 7 parts by weight of isopropyl alcohol and 3 parts by weight of diacetone alcohol) to prepare an undercoating liquid A.

An undercoating liquid B was prepared in the same manner as described above, except that the mixed solvent composed of 7 parts by weight of isopropyl alcohol and 3 parts by weight of diacetone alcohol was used in an amount of 79.92 parts by weight and 0.08 part by weight of an ultraviolet absorber (a hindered amine ultraviolet absorber, Sumisorb 577, manufactured by Sumitomo Chemical Co., Ltd.).

The undercoating liquid was coated on the substrate by spray coating using an air gun of. 0.8 mm⌀ at a coverage of 30 g/m², and the coating was dried at 80°C for 10 min.

A photocatalytic coating agent (a composition, manufactured by Ishihara Sangyo kaisha Ltd., comprising 5 parts by weight of finely divided titanium oxide particles having a diameter of about 10 nm, 5 parts by weight of amorphous silica, and 90 parts by weight of nitric acid, water, methanol, and 2-propanol) was diluted with a solvent (a mixed solvent composed of 7 parts by weight of isopropyl alcohol and 3 parts by weight of diacetone alcohol) to a solid concentration of 0.3% by weight to prepare a coating liquid. This coating liquid was spray-coated using an air gun of 0.8 mm⌀ at a coverage of 30 g/m², and the coating was dried at 80°C for 10 min, thereby preparing a sample. The sample prepared using the undercoating liquid A was designated as "sample B2-A," and the sample prepared using the undercoating liquid B was designated as "sample B2-B."

For comparison, the above photocatalytic coating liquid was coated on a commercially available transparent acrylic sheet in the same manner as described above, and the coating was dried to prepare sample B2-C.

The sample thus prepared was subjected to an accelerated weathering test (63°C, rainfall for 18 min in every 120 min) using a sunshine weatherometer.

As a result, for samples B2-A and B2-B, the contact angle with water was 5° , that is, retained the hydrophilicity, even after 300 hr after the initiation of the test. On the other hand, for sample B2-C, 6 hr after the initiation of the test, the surface coating was separated, resulting in an increase in contact angle of the surface of the sample with water to 50° . 300 hr after the initiation of the test, samples B2-A and B2-B, the transmission haze was measured with a haze meter (Haze Guard Plus, manufactured by Bik-Chemie Japan K.K.). As a result, the transmission haze was 5.77% for sample B2-A and 2.82% for sample B2-B. Sample B2-B contained an ultraviolet absorber in the undercoat, and an improvement in lightfastness by the addition of the ultraviolet absorber could be confirmed.

### Example C1

The bonnet of an automobile was washed while applying water on the bonnet to remove mud soil. Thereafter, the bonnet was divided into two areas. One area was a control area and treated with commercially available wax, while the other area was subjected to the following treatment.

At the outset, the bonnet was cleaned with an aqueous cleaning agent containing an inorganic fine particle abrasive and an anionic surfactant as additives by lightly rubbing the bonnet using an automobile cleaning sponge. The bonnet was then satisfactorily washed with water, water was wiped off with a dry waste, and the bonnet was then dried.

An organosilica sol (IPA-ST, solid concentration 30% by weight, manufactured by Nissan Chemical Industries Ltd.) was diluted with a mixed solution composed of 9 parts by weight of isopropanol and 1 part by weight of diacetone alcohol to a silica concentration of 0.1% by weight. This diluted solution was coated by spray coating using an air gun of 0.8 mm⌀ at a coverage of 104 g/m², and the coating was dried at room temperature.

The bonnet was then coated with the coating liquid (V) prepared in Example A21 by spray coating using an air gun of 0.8 mm⌀ at a coverage of 20 g/m², and the coating was dried at room temperature.

Immediately after the drying, water was sprayed. As a result, water droplets were formed, indicated that the hydrophilification was unsatisfactory. However, two days after the drying, spraying of water on the surface of the treated bonnet resulted in even spreading of the water without formation of water droplets.

Further, the treated bonnet and the control area were allowed to stand out of doors for one month. As a result, as compared with the control area, for the treated bonnet, the degree of deposition of soils, such as water scale, was lower. The lower degree of deposition of water scale was retained even after standing for 5 months. Further, after standing for 5 months, no lowering in gloss of the bonnet was observed.

For comparison, the same treatment as described above was carried out, except that the diluted solution of the organosilica sol was not applied and, in addition, the coating liquid (V) prepared in Example A21 was applied to the bonnet at a coverage of 20 g/m².

Immediately after the coating, water was sprayed. As a result, water droplets were formed, indicated that the hydrophilification was unsatisfactory. However, two days after the drying, spraying of water on the surface of the treated bonnet resulted in even spreading of the water without formation of water droplets.

Further, the treated bonnet and the control area were allowed to stand out of doors for one month. As a result, as compared with the control area, for the treated bonnet, the degree of deposition of soils, such as water scale, was lower. After standing for one month, however, a lowering in gloss of the bonnet was clearly confirmed with the naked eye.

### Example C2

A painted steel sheet, for an automobile, having a size of 70 mm x 150 mm was provided as a substrate.

Separately, an organosilica sol (IPA-ST, solid concentration 30% by weight, manufactured by Nissan Chemical Industries Ltd.) was diluted with a mixed solution composed of 9 parts by weight of isopropanol and 1 part by weight of diacetone alcohol to a silica concentration of 0.2% by weight. Further, a silane coupling agent (KBM 603, KBM 903, or KBE 903, manufactured by The Shin-Etsu Chemical Co., Ltd.) was added in an amount of 0.02% by weight. This undercoating liquid was coated by spray coating using an air gun of 0.8 mm⌀, and the coating was dried at room temperature.

This substrate was then coated with the coating liquid (V) prepared in Example A21 by spray coating using an air gun of 0.8 mm⌀, and the coating was dried at room temperature.

For comparison, a sample was prepared in the same manner as described above, except that no silane coupling agent was added.

30 min after drying, the surface of the substrate was rubbed with a wet sponge by reciprocating the sponge one stoke. As a result, both the sample with the silane coupling agent added thereto and the sample with no silane coupling agent added thereto lost the hydrophilicity (contact angle with water: about 70 to 80° ). The samples were exposed out of doors. However, the hydrophilicity was not restored. Therefore, it was estimated that the photocatalytic hydrophilic coating was peeled off by sliding of the sponge.

The samples which had been dried for 24 hr was rubbed with a wet sponge by reciprocating the sponge one stroke. As a result, both the samples lost the hydrophilicity. For the sample with the silane coupling agent added thereto, however, the hydrophilicity was restored upon being exposed out of doors (the contact angle with water was restored to 20 to 30° ). For the test piece with no silane coupling agent added thereto, the hydrophilicity was not restored (contact angle with water: about 60° ).

Unacceptable phenomena in appearance, such as agglomeration of the liquid, uneven coating, and whitening, and inhibition of hydrophilification, involved in the addition of the silane coupling agent, were not observed. Further, there is no difference in results between different types of silane coupling agents.

### Example C3

The bonnet of an automobile was washed while applying water on the bonnet to remove mud soil. Thereafter, the bonnet was divided into two areas. One area was a control area and treated with commercially available wax, while the other area was subjected to the following treatment.

At the outset, the bonnet was cleaned with an aqueous cleaning agent containing an inorganic fine particle abrasive and an anionic surfactant as additives by lightly rubbing the bonnet using an automobile cleaning sponge. The bonnet was then satisfactorily washed with water, water was wiped off with a dry waste, and the bonnet was then dried.

An undercoating liquid comprising 0.2% by weight of an aqueous colloidal silica (particle diameter 7 to 12 nm), 0.3% by weight of a polyether-modified organopolysiloxane (2% cloud point: 78°C), 1% by weight of ethylene glycol, 1.5% by weight of 2-propanol, and 87% by weight of water was prepared. A nonwoven fabric of polypropylene was impregnated with the undercoating liquid and spread over the half area of the bonnet, followed by drying at room temperature. The coverage was about 7 g/cm².

A photocatalytic coating agent (a composition, manufactured by Ishihara Sangyo kaisha Ltd., comprising 5 parts by weight of finely divided titanium oxide particles having a diameter of about 10 nm, 5 parts by weight of amorphous silica, and 90 parts by weight of nitric acid, water, methanol, and 2-propanol) was diluted 50 times with 1-propanol to prepare a coating liquid. This coating liquid was spray-coated using an air gun of 0.8 mm⌀ at a coverage of 25 g/m², and the coating was dried at room temperature.

The same treatment as described above was carried out for thirteen automobiles. The automobiles were run every day and parked out of doors.

6.2 days on the average were taken for the treated area to be hydrophilified to such an extent that spraying of water no longer resulted in the formation of water droplets. The number of fine weather days in this period was 2.2.

3 weeks after the initiation of the test, the degree of deposition of water scale and the like in the treated area was lower than that in the control area.

### Example C4

The bonnet of an automobile was washed while applying water on the bonnet to remove mud soil. Thereafter, the bonnet was divided into two areas. One area was a control area and treated with commercially available wax, while the other area was subjected to the following treatment.

At the outset, the bonnet was cleaned with an aqueous cleaning agent containing an inorganic fine particle abrasive and an anionic surfactant as additives by lightly rubbing the bonnet using an automobile cleaning sponge. The bonnet was then satisfactorily washed with water, water was wiped off with a dry waste, and the bonnet was then dried.

An undercoating liquid comprising 0.2% by weight of an aqueous colloidal silica (particle diameter 7 to 12 nm), 0.3% by weight of a polyether-modified organopolysiloxane (2% cloud point: 78°C), 1% by weight of ethylene glycol, 1.5% by weight of 2-propanol, and 87% by weight of water was prepared. A nonwoven fabric of polypropylene was impregnated with the undercoating liquid and spread over the half area of the bonnet, followed by drying at room temperature. The coverage was about 7 g/cm².

An aerosol spray container was filled with 40 parts by weight of a diluted solution, prepared by diluting a photocatalytic coating agent (a composition, manufactured by Ishihara Sangyo kaisha Ltd., comprising 5 parts by weight of finely divided titanium oxide particles having a diameter of about 10 nm, 5 parts by weight of amorphous silica, and 90 parts by weight of nitric acid, water, methanol, and 2-propanol) 100 times with 1-propanol, and 60 parts by weight of dimethyl ether. Thus, an aerosol composition was prepared. This aerosol composition was sprayed on the bonnet to form a photocatalytically hydrophilifiable coating. The coverage of the photocatalytic coating liquid was 25 g/m². After the coating by aerosol spray coating, the coating was dried at room temperature.

The same treatment as described above was carried out for five automobiles. The automobiles were run every day and parked out of doors.

6.2 days on the average were taken for the treated area to be hydrophilified to such an extent that spraying of water no longer resulted in the formation of water droplets. The number of fine weather days in this period was 2.2.

Three weeks after the initiation of the test, the degree of deposition of water scale and the like in the treated area was lower than that in the control area.

### Example C4

The bonnet of an automobile was washed while applying water on the bonnet to remove mud soil. Thereafter, the bonnet was cleaned with an aqueous cleaning agent (pH 11.9) containing a nonionic surfactant and an alkali inorganic builder as additives by lightly rubbing the bonnet using an automobile cleaning sponge. The bonnet was then satisfactorily washed with water, water was wiped off with a dry waste, and the bonnet was then dried.

A cold curing silicone coating agent (X-40-9740, manufactured by The Shin-Etsu Chemical Co., Ltd.) was diluted 50 times with a solvent (a mixture of 8 parts by weight of isopropyl alcohol with 2 parts by weight of propylene glycol monopropyl ether). This diluted solution was spray-coated using an air gun of 0.8 mm⌀ at a coverage of 100 g/m², and the coating was dried at 80°C for one hr.

A 1 : 1 mixed solution of photocatalytic coating liquids ST-K 01 and ST-K 03 manufactured by Ishihara Sangyo kaisha Ltd. was diluted 50 times with a mixed solvent composed of 8 parts by weight of isopropyl alcohol and 2 parts by weight of propylene glycol monopropyl ether to prepare a coating liquid. This liquid was spray-coated using an air gun of 0.8 mm⌀, and the coating was dried at 80°C for one hr.

The automobile was allowed to stand out of doors.

Four days after the treatment, there was a rainfall. As a result, no raindrop was formed on the surface of the bonnet, and, instead, an even water film was formed. The hydrophilicity was retained 6 months after the initiation of the treatment.

### Example D

Undercoating compositions of Examples D1 to D10 according to the following respective formulations were prepared.

### Example D1

| | |
|---|---|
| Aqueous colloidal silica (particle diameter: 10-20 nm) | 0.1 wt% |
| Polyoxyethylene lauryl ether (2% cloud point: 80°C) | 0.5 wt% |
| Propylene glycol | 0.5 wt% |
| Isopropyl alcohol | 5 wt% |
| Water | Balance |

### Example D2

| | |
|---|---|
| Aqueous colloidal silica (particle diameter: 10-20 nm) | 0.2 wt% |
| Polyoxyethylene nonylphenyl ether (2% cloud point: 55°C) | 0.3 wt% |
| Ethylene glycol | 1 wt% |
| Methanol-modified ethyl alcohol | 1 wt% |
| Water | Balance |

### Example D3

| | |
|---|---|
| Aqueous colloidal silica (particle diameter: 10-20 nm) | 0.4 wt% |
| Polyether-modified organopolysiloxane (2% cloud point: 78°C) | 0.3 wt% |
| Diethylene glycol monoethyl ether | 2 wt% |
| Isopropyl alcohol | 2 wt% |
| Water | Balance |

### Example D4

| | |
|---|---|
| Aqueous colloidal silica (particle diameter: 7-12 nm) | 0.2 wt% |
| Polyether-modified organopolysiloxane (2% cloud point: 62°C) | 0.3 wt% |
| Ethylene glycol | 1 wt% |
| Diethylene glycol monoethyl ether | 1.5 wt% |
| Isopropyl alcohol | 10 wt% |
| Water | Balance |

### Example D5

| | |
|---|---|
| Aqueous colloidal silica (particle diameter: 7-12 nm) | 0.4 wt% |
| Di(2-ethylhexylsulfosuccinate sodium salt) | 0.3 wt% |
| Triethylene glycol dimethyl ether | 0.5 wt% |
| Isopropyl alcohol | 20 wt% |
| Water | Balance |

### Example D6

| | |
|---|---|
| Aqueous colloidal silica (particle diameter: 7-12 nm) | 0.8 wt% |
| Polyoxyethylene lauryl ether (2% cloud point: 80°C) | 1.2 wt% |
| Propylene glycol | 1 wt% |
| Diethylene glycol monoethyl ether | 2 wt% |
| Methanol-modified ethyl alcohol | 15 wt% |
| Water | Balance |

### Example D7

| | |
|---|---|
| Aqueous colloidal silica (particle diameter: 7-12 nm) | 1.6 wt% |
| Polyoxyethylene nonylphenyl ether (2% cloud point: 55°C) | 0.1 wt% |
| Polyether-modified organopolysiloxane, (2% cloud point: 78°C) | 0.1 wt% |
| Ethylene glycol | 1.5 wt% |
| Triethylene glycol dimethyl ether | 0.2 wt% |
| Isopropyl alcohol | 5 wt% |
| Water | Balance |

### Example D8

| | |
|---|---|
| Organosilica sol (dispersing medium: ethylene glycol, particle diameter: 10-20 nm) | 0.1 wt% |
| Di(2-ethylhexylsulfosuccinate sodium salt) | 0.2 wt% |
| Propylene glycol | 0.5 wt% |
| Ethylene glycol | 0.5 wt% |
| Methanol-modified ethyl alcohol | 83 wt% |
| Water | Balance |

### Example D9

| | |
|---|---|
| Organosilica sol (dispersing medium: ethylene glycol, particle diameter: 10-20 nm) | 0.5 wt% |
| Polyether-modified organopolysiloxane (2% cloud point: 78°C) | 0.2 wt% |
| Propylene glycol | 0.5 wt% |
| Ethylene glycol | 0.5 wt% |
| Diethylene glycol monoethyl ether | 0.5 wt% |
| Methanol-modified ethyl alcohol | 50 wt% |
| Water | Balance |

### Example D10

| | |
|---|---|
| Organosilica sol (dispersing medium: ethylene glycol, particle diameter: 10-20 nm) | 2 wt% |
| Polyether-modified organopolysiloxane (2% cloud point: 62°C) | 0.5 wt% |
| Triethylene glycol dimethyl ether | 0.5 wt% |
| Isopropyl alcohol | 97 wt% |

### Evaluation test

Each of the undercoating compositions of Examples D1 to D10 were spray-coated on a steel sheet or transparent acrylic resin sheet having a size of 30 cm x 30 cm, and the coating was dried at room temperature for 15 min. Thereafter, the coating liquid prepared in Example C4 was spray-coated on the undercoating composition to form a photocatalytic hydrophilic coating.

The coverage of the undercoating composition was as follows.

| Example | Coverage, g/m² |
|---|---|
| D1 | 15 |
| D2 | 10 |
| D3 | 10 |
| D4 | 12 |
| D5 | 8 |
| D6 | 7 |
| D7 | 5 |
| D8 | 20 |
| D9 | 10 |
| D10 | 5 |

The samples thus prepared were evaluated as follows.

### (1) Coating properties of surface treatment

An undercoating composition was coated on a substrate, and the coating was dried. In this case, the coating was visually inspected and evaluated for cissing upon drying and uneven coating.

As a result, uneven coating somewhat occurred for the compositions of Examples D5, D6, and D8 on the steel sheet. By contrast, for the other compositions, neither cissing nor uneven coating occurred on the steel sheet and the transparent acrylic resin sheet.

### (2) Light interference fringes

The samples were visually inspected for light interference fringes.

As a result, for all the samples, the light interference fringes was not observed at all.

### (3) Surface state after coating of photocatalyst

A titanium oxide sol was coated on a substrate, and the coating was dried. The surface state after drying was visually inspected. As a result, uneven coating was somewhat observed for the compositions of Examples D5 and D8. By contrast, for the other compositions, coating on the steel sheet and the transparent acrylic resin sheet was transparent and even, and uneven coating was not observed.

### (4) Deterioration

The samples were allowed to stand out of doors and exposed to sunlight for 180 days. The surface state after the standing was visually inspected.

As a result, for all the samples, there was no difference in surface state between before standing and after standing.

### Example E

The following two liquids were separately prepared as undercoating compositions. These two liquids are thoroughly mixed together immediately before use as an undercoating composition.

| Liquid A | |
|---|---|
| Colloidal silica (particle diameter 10-20 nm) | 0.23 wt% |
| Water | 99.77 wt% |

| Liquid B | |
|---|---|
| Silicone surfactant | 2.3 wt% |
| Isopropyl alcohol | 78.1 wt% |
| Ethylene glycol | 7.7 wt% |
| Diethylene glycol monoethyl ether | 11.5 wt% |
| Perfume | 0.39 wt% |

### Example F1: Application to painted face of shutter

The periphery of a coating face of a shutter (Overslider, coated with acryl-urethane paint, manufactured by Sanwa Shutter Corp.) facing the north side was masked to prevent scattering of the coating composition around the coating face. Thereafter, deposited soil was removed by brushing with an aqueous cleaning agent (pH 9.5) containing a sodium alkylbenzenesulfonate and a fatty acid alkanolamide as surfactants. The cleaning agent was washed away using a tap water hose, and soil in detailed portions was wiped off with a water-impregnated waste. Thereafter, the shutter was wiped with a dry waste to remove water and then air-dried.

Subsequently, a mixed liquid composed of a photocatalytic coating liquid ST-K 01 manufactured by Ishihara Sangyo kaisha Ltd. and a photocatalytic coating liquid ST-K 03 manufactured by Ishihara Sangyo kaisha Ltd. in a ratio of 1 : 1 was diluted 20 times with a mixed solvent comprising 2 propanol and a levelling agent (that is, comprising 90 parts by weight of 2-propanol and 10 parts by weight of diacetone alcohol) to prepare a photocatalytic coating liquid. The photocatalytic coating liquid was spray-coated on the cleaned surface of the shutter using an air gun of 1.2 mm⌀ at a coverage of 105 g/m², and the coating was then dried at room temperature, thereby curing the coating.

Two weeks after the coating, water was sprayed by means of a hand spray on the treated area and the comparative area (area subjected to only the cleaning treatment). As a result, for the treated area, water was evenly spread into a water film without formation of water droplets, whereas for the comparative area, water droplets were formed. This indicates that the treated area had been hydrophilified.

After coating of the coating liquid, the appearance of the coated face was periodically inspected. From one month after the coating, the degree of deposition of soil in the treated area became lower than that in the comparative area. One year after the coating, the degree of deposition of soil in the treated area was significantly lower than that in the comparative area.

### Example F2: Application to outer wall which has been spray coated with scraped finish

A face, which had been spray-coated with scraped finish, of the outer wall of a building facing the north side (made of lightweight cellular concrete, coated with an acrylic emulsion paint) was masked to prevent scattering of a coating composition around the coating face. Thereafter, deposited soil was removed by brushing with an aqueous cleaning agent (pH 9.5) containing a sodium alkylbenzenesulfonate and a fatty acid alkanolamide as surfactants. The cleaning agent was washed away using a tap water hose, followed by air drying.

Subsequently, a mixed liquid composed of a photocatalytic coating liquid ST-K 01 manufactured by Ishihara Sangyo kaisha Ltd. and a photocatalytic coating liquid ST-K 03 manufactured by Ishihara Sangyo kaisha Ltd. in a ratio of 1 : 1 was diluted 20 times with a mixed solvent comprising 2 propanol and a levelling agent (that is, comprising 90 parts by weight of 2-propanol and 10 parts by weight of diacetone alcohol) to prepare a photocatalytic coating liquid. The photocatalytic coating liquid was roll-coated on the cleaned surface of the outer wall, and the coating was then dried at room temperature, thereby curing the coating.

After coating of the coating liquid, the appearance of the coated face was periodically inspected. From four months after the coating, the degree of deposition of soil in the treated area became lower than that in the comparative area (area subjected to only cleaning treatment). One year after the coating, the degree of deposition of soil in the treated area was significantly lower than that in the comparative area.

For both the treated area and comparative area, the hydrophilicity could not be evaluated because these areas had surface irregularities.

## Claims

1. A cleaning agent for cleaning the surface of a substrate on which a photocatalytically hydrophilifiable coating is to be formed, said cleaning agent comprising at least one member selected from the group consisting of a surfactant, an abrasive, an acid, a base, and a solvent.

2. The cleaning agent according to claim 1, which comprises at least the abrasive.

3. The cleaning agent according to claim 1, which comprises: (a) the abrasive; and (b) at least one member selected from the group consisting of a surfactant, an acid, a base, and a solvent.

4. The cleaning agent according to claim 3, wherein the surfactant is a nonionic surfactant.

5. The cleaning agent according to claim 3, wherein the abrasive has an average particle diameter of 0.01 to 100 µm.

6. The cleaning agent according to claim 1, which has a pH value of not less than 10.

7. The cleaning agent according to claim 1, which comprises at least one member selected from the group consisting of hydrogen fluoride, acid ammonium fluoride, and acid potassium fluoride.

8. An undercoating composition for forming an undercoat on the surface of a substrate on which a photocatalytically hydrophilifiable coating is to be formed,
said undercoating composition comprising: at least one member selected from the group consisting of an inorganic oxide particle, a silicone capable of forming a silicone resin coating, a silicone precursor capable of forming a silicone resin coating, and a silica precursor capable of forming a silica coating; and
a solvent.

9. The undercoating composition according to claim 8, which further comprises a binder for fixing the oxide particle, silicone, or silica on the surface of the substrate.

10. The undercoating composition according to claim 8, wherein said silicone or precursor thereof is a silicone or precursor thereof comprising an organic group, containing a crosslinkable functional group, bonded to a silicon atom, the undercoat being fixed to the surface of the substrate and the photocatalytically hydrophilifiable coating provided on the undercoat through a crosslinking reaction of the crosslinkable functional group.

11. A method for forming a photocatalytically hydrophilifiable coating on the surface of a substrate, comprising the steps of:
cleaning the surface of the substrate with the cleaning agent according to any one of claims 1 to 7;
coating a photocatalytically hydrophilifiable coating liquid on the cleaned substrate; and
curing the liquid to form the photocatalytically hydrophilifiable coating.

12. A method for forming a photocatalytically hydrophilifiable coating on the surface of a substrate, comprising the steps of:
cleaning the surface of the substrate with the cleaning agent according to any one of claims 1 to 7;
applying the undercoating composition according to any one of claims 8 to 10 onto the surface of the substrate to form an undercoat;
coating a photocatalytically hydrophilifiable coating liquid on the undercoat; and
curing the coating to form the photocatalytically hydrophilifiable coating.

13. The method according to claim 11 or 12, wherein the surface of the substrate is a painted surface.

14. The method according to claim 11 or 12, wherein the surface of the substrate is a glass surface.

15. The method according to claim 11 or 12, wherein the surface of the substrate has been soiled with a sparingly soluble calcium salt.

16. The method according to claim 11 or 12, wherein the substrate is a windowpane having the surface on which permanent soil is deposited thereon.

17. The method according to claim 11 or 12, wherein the surface of the substrate has a surface which is stained with a water-repellent silicone.

18. The method according to claim 11, wherein when the surface of the substrate has been stained with a water-repellent silicone, after the step of cleaning the surface of the substrate with the cleaning agent according to any one of claims 1 to 7,
the surface of the substrate is exposed to ultraviolet light or subjected to corona discharge treatment,
followed by coating of a photocatalytically hydrophilifiable coating liquid and curing of the coating.

19. The method according to claim 11 or 12, wherein the photocatalytically hydrophilifiable coating liquid comprises:
photocatalyst particles of a metal oxide,
at least one member selected from the group consisting of an inorganic oxide particle, a silicone capable of forming a silicone resin coating, a silicone resin coating precursor capable of forming a silicone resin coating, and a silica coating precursor capable of forming a silica coating; and
a solvent.

20. The method according to claim 19, wherein the silicone resin coating precursor is a siloxane represented by the following average composition formula:
RₚSiX_{q}O_{(4-p-q)/2}
wherein R represents a functional group comprising at least one monovalent organic group or a functional group comprising at least two members selected from monovalent organic group and a hydrogen group; X represents an alkoxy group or a halogen atom; and p is a number satisfying 0 < p < 2 and q is a number satisfying 0 < q < 4.

21. The method according to claim 19, wherein the silica coating precursor is a silicate represented by the following average composition formula:
SiX_{q}O_{(4-q)/2}
wherein X represents an alkoxy group or a halogen atom; and q is a number satisfying 0 < q < 4.

22. A set comprising: the cleaning agent according to any one of claims 1 to 7; and the undercoating composition according to any one of claims 8 to 10.

23. A set comprising: the cleaning agent according to any one of claims 1 to 7 and/or the undercoating composition according to any one of claims 8 to 10; and the photocatalytically hydrophilifiable coating liquid as defined in any one of claims 18 to 20.

24. A member comprising: a substrate; an undercoat provided on the substrate; and a photocatalytically hydrophilifiable coating provided on the undercoat,
the undercoat comprising at least one member selected from the group consisting of an inorganic oxide particle, a silicone, and silica.

25. The member according to claim 24, wherein the substrate is an automobile body, glass or a painted surface.
